(19)

**Europäisches Patentamt**
**European Patent Office**
**Office européen des brevets**

(11) **EP 4 488 674 B1**

(12) **EUROPEAN PATENT SPECIFICATION**

(45) Date of publication and mention
of the grant of the patent:
**05.08.2026 Bulletin 2026/32**

(21) Application number: **24160317.4**

(22) Date of filing: **28.02.2024**

(51) International Patent Classification (IPC):
**G01N 29/07** *(2006.01)*    **G01M 7/02** *(2006.01)*
**G01N 29/14** *(2006.01)*    **G01N 29/44** *(2006.01)*

(52) Cooperative Patent Classification (CPC):
**G01N 29/14; G01M 7/02; G01N 29/07;**
**G01N 29/4418; G01N 29/4472;** G01N 2291/0232;
G01N 2291/0289; G01N 2291/106

(54) **STRUCTURE EVALUATION SYSTEM, STRUCTURE EVALUATION APPARATUS, AND STRUCTURE EVALUATION METHOD**

STRUKTURBEURTEILUNGSSYSTEM, STRUKTURBEURTEILUNGSVORRICHTUNG UND STRUKTURBEURTEILUNGSVERFAHREN

SYSTÈME D'ÉVALUATION DE STRUCTURE, APPAREIL D'ÉVALUATION DE STRUCTURE ET PROCÉDÉ D'ÉVALUATION DE STRUCTURE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.07.2023 JP 2023109405**

(43) Date of publication of application:
**08.01.2025 Bulletin 2025/02**

(73) Proprietor: **Kabushiki Kaisha Toshiba**
**Tokyo 105-0023 (JP)**

(72) Inventors:
• **USUI, Takashi**
**Minato-ku, Tokyo (JP)**

• **TAKAMINE, Hidefumi**
**Minato-ku, Tokyo (JP)**
• **UEDA, Yuki**
**Minato-ku, Tokyo (JP)**
• **WATABE, Kazuo**
**Minato-ku, Tokyo (JP)**

(74) Representative: **Hoffmann Eitle**
**Patent- und Rechtsanwälte PartmbB**
**Arabellastraße 30**
**81925 München (DE)**

(56) References cited:
**EP-A1- 3 761 022     EP-A1- 4 151 995**
**GB-A- 2 442 390     US-A1- 2022 187 253**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 488 674 B1

**Description**

FIELD

Embodiments described herein relate generally to a structure evaluation system, a structure evaluation apparatus, and a structure evaluation method.

BACKGROUND

When a sensor is installed on the surface of a structure such as a bridge, it is possible to detect elastic waves generated inside the structure. Furthermore, when a plurality of sensors are installed on the surface of the structure, the position of the generation source of elastic waves (hereinafter referred to as an "elastic wave source") can be located on the basis of the difference in arrival time of elastic waves detected by each of the sensors. Even when an impact is applied to the surface of the structure from the outside, elastic waves are generated inside the structure. Even in such a case, the position of the elastic wave source can be located on the basis of the difference in the arrival times of the elastic waves detected by each of the sensors.

When the propagation path of elastic waves inside the structure is damaged, the propagation of the elastic waves is hindered. If the propagation of the elastic waves is hindered due to damage inside the structure, some of the sensors cannot detect elastic waves. As a result, the accuracy of the location results for the elastic wave sources decreases. When an impact which is spatially uniformly applied such as the impact of raindrops on the road surface during rain is applied to the surface of the structure and elastic waves are detected by each sensor installed on the opposite side, in regions with internal damage, the density of elastic wave sources is observed to decrease. Using such features, the state of deterioration of the structure (presence or absence of damage inside the structure) can be evaluated. Particularly, damage inside the structure can be detected using elastic waves generated due to a vehicle traveling on the road surface.

In the related art, various correction methods for improving the accuracy of the evaluation results obtained using the above method have been disclosed. A method for correcting a density of elastic wave sources using a correction value based on a ratio of the number of passing vehicles to the number of passing vehicles obtained from the structure to be compared, for example, by estimating information about a vehicle traveling in the place to be measured to compare measurement results of different traffic volumes is disclosed.

For a position location process of specifying a position of an elastic wave source, an algorithm called event extraction in which the fact that a plurality of hits result from the same event (for example, the same impact) is determined is used. Specifically, the event extraction algorithm is a process by which hits detected by two or more sensors at approximately the same time within a predetermined time window are considered to result from the same event. Here, the event extraction algorithm may generate pseudo density distribution patterns which need not exist in the first place due to random noise which occurs under certain conditions in some cases. For this reason, due to such a pseudo-density distribution pattern, the accuracy of evaluating the state of deterioration of a structure may be reduced in some cases. Document EP 3 761 022 A1 relates to a structure evaluation system that includes a plurality of sensors, a position locator, and an evaluator. The plurality of sensors detect elastic waves. The position locator locates positions of elastic wave sources by using the elastic waves among the plurality of elastic waves respectively detected by the plurality of sensors having an amplitude exceeding a threshold value determined according to positions of the sources of the plurality of elastic waves and the positions of the plurality of disposed sensors. The evaluator evaluates a deteriorated state of the structure on the basis of results of the position locating of the elastic wave sources which is performed by the position locator. Document EP 4 151 995 A1 relates to a structure evaluation system that includes at least three or more sensors, a position locator, and an evaluator. The three or more sensors are arranged on surfaces different from a surface to which an impact is applied with respect to a structure at different intervals in a first direction of the structure and a second direction orthogonal to the first direction and detects elastic waves generated from the structure. The position locator locates a position of a source in which the elastic waves are generated on the basis of the elastic waves detected by each of the three or more sensors. The evaluator evaluates a deterioration state of the structure on the basis of information based on a position location process of the position locator and information indicating a position where the impact is applied.

Document US 2022/187253 A1 relates to a structure evaluation system that includes a plurality of sensors, a position locator, a corrector, and an evaluator. The plurality of sensors detect elastic waves generated from a structure. The position locator locates the position of a generation sources of a plurality of elastic waves on the basis of the plurality of elastic waves detected by the plurality of sensors. The corrector corrects information based on the position locating performed by the position locator using a correction value set in correspondence with an impact. The evaluator evaluates a deterioration state of the structure on the basis of the corrected information.

BRIEF DESCRIPTION OF THE DRAWINGS

FIG. 1 is a diagram showing a constitution of a structure evaluation system in a first embodiment.

FIG. 2 is a diagram showing a constitution example of a signal processor in the first embodiment.

FIG. 3 is a diagram for explaining a method for measuring elastic waves in the first embodiment.

FIG. 4 is a flowchart for describing a flow of a reference distribution generation process performed by a reference distribution generator in the first embodiment.

FIG. 5A is a diagram showing an example of a reference distribution obtained when a time window width k=1 [μs] is satisfied.

FIG. 5B is a diagram showing an example of a reference distribution obtained when a time window width k=10 [μs] is satisfied.

FIG. 5C is a diagram showing an example of a reference distribution obtained when a time window width k=100 [μs] is satisfied.

FIG. 5D is a diagram showing an example of a reference distribution obtained when a time window width k=200 [μs] is satisfied.

FIG. 5E is a diagram showing an example of a reference distribution obtained when a time window width k=500 [μs] is satisfied.

FIG. 5F is a diagram showing an example of a reference distribution obtained when a time window width k=1000 [μs] is satisfied.

FIG. 6 is a diagram showing a relationship between a time window width k and feature values relating to a location accuracy of an elastic wave source density distribution.

FIG. 7A is a diagram for explaining a method for calculating an index of uncertainty of a position location result in the first embodiment.

FIG. 7B is a diagram for explaining a method for calculating an index of uncertainty of a position location result in the first embodiment.

FIG. 7C is a diagram for explaining a method for calculating an index of uncertainty of a position location result in the first embodiment.

FIG. 8 is a sequence diagram showing a flow of an evaluation process of a state of deterioration using a structure evaluation system in the first embodiment.

FIG. 9 is a diagram for explaining an overview of a process performed by a distribution selector in a modified example of the first embodiment.

FIG. 10 is a diagram showing a constitution of a structure evaluation system in a second embodiment.

FIG. 11 is a sequence diagram showing a flow of an evaluation process of a state of deterioration using the structure evaluation system in the second embodiment.

FIG. 12A is a diagram showing a detection example of elastic waves of each sensor in a simulation in each embodiment.

FIG. 12B is a diagram showing a detection example of elastic waves of each sensor in a simulation in a modified example in each embodiment.

DETAILED DESCRIPTION

The present invention provides problem to be solved by the present invention is to provide a structure evaluation system, a structure evaluation apparatus, and a structure evaluation method which can suppress a decrease in evaluation accuracy of a state of deterioration of a structure. According to the present invention there is provided a structure evaluation system according to claim 1 and a structure evaluation method according to claim 11.

According to one embodiment, a structure evaluation system of an embodiment includes a plurality of sensors, a position locator, a distribution generator, and an evaluator. The plurality of sensors detect elastic waves generated inside a structure. The position locator locates positions of one or more elastic wave generation sources on the basis of a plurality of elastic waves detected by each of the plurality of sensors. The distribution generator generates an elastic wave source density distribution representing a density distribution of the one or more elastic wave generation sources on the basis of a position location result of the one or more elastic wave generation sources obtained by the position locator. The evaluator evaluates damage to the structure on the basis of one or more reference distributions generated on the basis of a simulation including a random number and the elastic wave source density distribution generated by the distribution generator.

A structure evaluation system, a structure evaluation apparatus, and a structure evaluation method of an embodiment will be explained below with reference to the drawings.

(First embodiment)

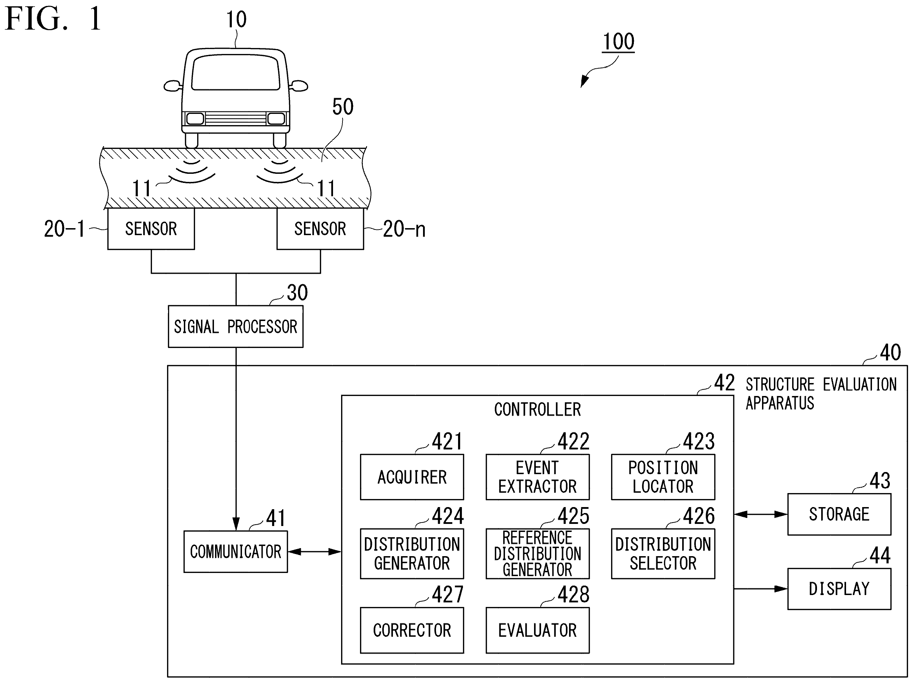

FIG. 1 is a diagram showing a constitution of a structure evaluation system 100 in a first embodiment. The structure evaluation system 100 is used for evaluating the soundness of a structure 50. In the following explanation, evaluation means determining a degree of soundness of the structure 50, that is, a state of deterioration of the structure 50 on the basis of certain criteria.

Although a case in which the structure 50 is a bridge will be explained as an example in the following explanation, the structure 50 does not need to be limited to a bridge. The structure 50 may be any structure as long as it generates elastic waves 11 due to the occurrence or the progress of cracks or an external impact (for example, rain, artificial rain, and the like). A bridge is not limited to a structure built over a river, a valley, or the like, but also includes various structures and the like built above the ground (for example, a viaduct on a highway).

Examples of damages that affect the evaluation of the state of deterioration of the structure 50 include damage inside the structure which impedes the propagation of the elastic waves 11 such as cracks, cavities, and sedimentation in some cases. Here, cracks include vertical cracks, horizontal cracks, diagonal cracks, and the like. The vertical cracks are cracks which occur in a direction perpendicular to that of the road surface. The horizontal cracks are cracks which occur horizontally to the road surface. The diagonal cracks are cracks which occur in a direction other than a horizontal direction or a vertical direction with respect to the road surface. Sedimentation is a deterioration in which a concrete part turns into sand and sand, mainly at the boundary between asphalt and concrete slabs.

The structure evaluation system 100 includes a plurality of sensors 20-1 to 20-n (n is an integer of 2 or more), a signal processor 30, and a structure evaluation apparatus 40. Each of the plurality of sensors 20-1 to 20-n and the signal processor 30 are communicably connected by wire. The signal processor 30 and the structure evaluation apparatus 40 are communicably connected by wire or wirelessly. In the following explanation, when the sensors 20-1 to 20-n are not distinguished, they will be referred to as a sensor 20.

As shown in FIG. 1, when a vehicle 10 passes over the structure 50, a load is applied to the road surface due to contact between traveling parts of the vehicle 10 and the road surface. A large number of elastic waves 11 are generated inside the structure 50 due to the deflection due to the load. Each of the sensors 20 installed on the lower surface of the structure 50 can detect the elastic waves 11 generated inside the structure 50.

The sensors 20 include piezoelectric elements and detect the elastic waves 11 generated from inside the structure 50. The sensors 20 are installed at positions in which they can detect the elastic waves 11 on the surface of the structure 50. For example, the sensors 20-1 to 20-n are installed on the road surface, the side surface, or the bottom surface at the same or at different intervals in the vehicle travel axis direction and in the vehicle travel axis orthogonal direction, respectively. The vehicle travel axis direction refers to a direction in which the vehicle travels on the road surface. The vehicle travel axis orthogonal direction refers to a direction perpendicular to the vehicle travel axis direction. The sensors 20 convert the detected elastic waves 11 into electrical signals. In the following explanation, a case in which the sensors 20 are installed on the bottom surface of the structure 50 will be explained as an example.

For the sensors 20, for example, a piezoelectric element having sensitivity within the range of 10 kHz to 1 MHz is used. The sensors 20 can be of any type such as a resonant type which has a resonance peak within a frequency range or a broadband type which suppresses resonance and the sensors 20 may be of any type. Although a method for detecting, by the sensors 20, the elastic waves 11 is of a voltage output type, a variable resistance type, a capacitance type, or the like, any detection method may be used.

Acceleration sensors may be used instead of the sensors 20. In this case, the acceleration sensors detect the elastic waves 11 generated inside the structure 50. Furthermore, the acceleration sensors convert the detected elastic waves 11 into electrical signals by performing the same processing as the sensors 20.

For example, an amplifier, a filter, and an analog-to-digital converter (not shown) are provided between the sensors 20 and the signal processor 30. The amplifier amplifies an electrical signal output from the sensors 20. The amplifier, for example, amplifies the electrical signal to the extent that it can be processed in an analog-to-digital converter. The amplifier outputs the amplified electrical signal to the filter. The filter removes noise components outside a predetermined band. The filter is, for example, a band pass filter (BPF). The electrical signal from which noise has been removed using the filter is input to the analog-to-digital converter. The analog-to-digital converter quantizes the noise-removed electrical signal and converts it into a digital signal. The analog-to-digital converter outputs a digital signal to the signal processor 30.

The signal processor 30 receives, as an input, a digital signal output from the analog-to-digital converter. The signal processor 30 performs signal processing on the input digital signal. The signal processing performed by the signal processor 30 includes, for example, noise removal, extraction of feature values of elastic waves, and the like. The signal processor 30 generates transmission data including a digital signal after signal processing. The signal processor 30 outputs the generated transmission data to the structure evaluation apparatus 40.

The signal processor 30 is constituted using an analog circuit or a digital circuit. When the signal processor 30 is constituted by an analog circuit, the analog-to-digital converter may not be provided between the sensors 20 and the signal processor 30. That is to say, when the signal processor 30 is constituted by an analog circuit, an electrical signal from which noise has been removed using a filter is input to the signal processor 30. The digital circuit is realized using, for example, a field programmable gate array (FPGA) or a microcomputer. The digital circuit may be realized using a dedicated large-scale integration (LSI). Furthermore, the signal processor 30 may include a nonvolatile memory such as a flash memory or a removable memory. **In** the following explanation, a case in which the signal processor 30 is constituted using a digital circuit will be explained.

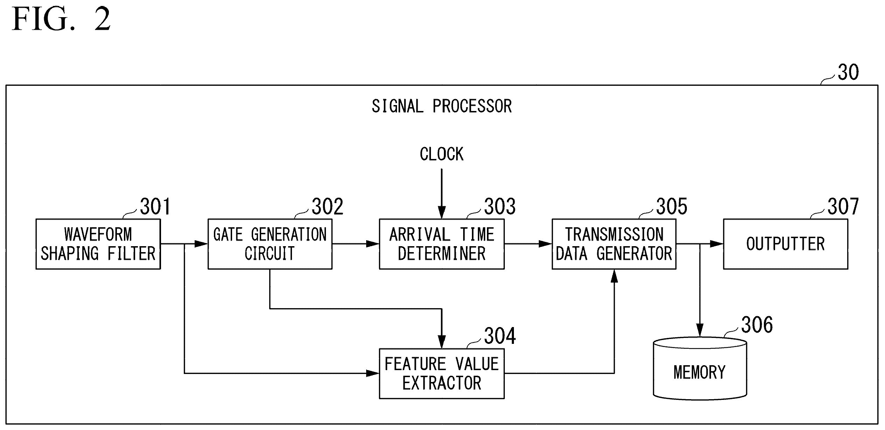

FIG. 2 is a diagram showing a constitution example of the signal processor 30 in the first embodiment. The signal processor 30 includes a waveform shaping filter 301, a gate generation circuit 302, an arrival time determiner 303, a feature value extractor 304, a transmission data generator 305, a memory 306, and an outputter 307.

The waveform shaping filter 301 removes noise components outside a predetermined band from the input digital signal. The waveform shaping filter 301 is, for example, a digital band pass filter (BPF). The waveform shaping filter 301 outputs a digital signal after noise component removal (hereinafter referred to as a "noise removal signal") to the gate generation circuit 302 and the feature value extractor 304.

The gate generation circuit 302 receives, as an input, a noise removal signal output from the waveform shaping filter 301. The gate generation circuit 302 generates a gate signal on the basis of the input noise removal signal. The gate signal is a signal indicating whether a waveform of the noise removal signal is sustained.

The gate generation circuit 302 is realized using, for example, an envelope detector and a comparator. The envelope detector detects an envelope of the noise removal signal. The envelope is extracted by, for example, squaring the noise removal signal and performing predetermined processing (for example, processing using a lowpass filter or Hilbert transformation) on the squared output value. The comparator determines whether the envelope of the noise removal signal is a predetermined threshold or more.

When the envelope of the noise removal signal is the predetermined threshold or more, the gate generation circuit 302 outputs a first gate signal indicating that the waveform of the noise removal signal is sustained to the arrival time determiner 303 and the feature value extractor 304. On the other hand, when the envelope of the noise removal signal becomes less than the predetermined threshold, the gate generation circuit 302 outputs a second gate signal indicating that the waveform of the noise removal signal is not sustained to the arrival time determiner 303 and the feature value extractor 304. Although a constitution in which a determination concerning whether the noise removal signal waveform is sustained is performed on the basis of the envelope in the gate generation circuit 302 is shown, the gate generation circuit 302 may process the noise removal signal itself or a signal to which an absolute value is applied. The threshold used for this gate generation is referred to as a measurement threshold.

The arrival time determiner 303 receives, as inputs, a clock output from a clock source (not shown) such as a crystal oscillator and a gate signal output from the gate generation circuit 302. The arrival time determiner 303 determines an elastic wave arrival time using the clock input while the first gate signal is input. The arrival time determiner 303 outputs the determined elastic wave arrival time to the transmission data generator 305 as time information. The arrival time determiner 303 does not perform any processing while the second gate signal is input. The arrival time determiner 303 generates cumulative time information since power-on on the basis of the signal from the clock source. Specifically, the arrival time determiner 303 may be used as a counter which counts the edges of the clock signal and has a value of a register of the counter as time information. The register of the counter is determined to have a predetermined bit length.

The feature value extractor 304 receives, as inputs, a noise removal signal output from the waveform shaping filter 301 and a gate signal output from the gate generation circuit 302. The feature value extractor 304 uses the noise removal signal input while the first gate signal is input to extract feature values of the noise removal signal. The feature value extractor 304 does not perform any processing while the second gate signal is input. Feature values are information indicating the features of the noise removal signal. That is to say, the feature values of the noise removal signal are the feature values of elastic waves detected using the sensors 20.

The feature values include, for example, a waveform amplitude [mV], a waveform rise time [usec], gate signal sustain duration [usec], a zero cross count number [times], a waveform energy [arb.], frequency [Hz], root mean square (RMS) value, and the like. The feature value extractor 304 outputs parameters concerning the extracted feature values to the transmission data generator 305. The feature value extractor 304 associates the sensor ID with parameters relating to feature values at the time of outputting parameters relating to the feature values. A sensor ID represents identification information for identifying each of the sensors 20 installed in a region (hereinafter referred to as an "evaluation region") in which the soundness of the structure 50 is to be evaluated.

The waveform amplitude is, for example, a maximum amplitude value in the noise removal signal. The waveform rise time is, for example, a time T1 until the noise removal signal reaches a maximum value thereof from the start of the rise of the gate signal. The gate signal sustainduration is, for example, a time until the amplitude becomes smaller than a preset value from when the gate signal starts rising. The zero cross count number is, for example, the number of times the noise removal signal crosses the criterion line passing through a zero value.

The waveform energy is, for example, a value obtained by time-integrating the square of the amplitude of the noise removal signal at each time point. The definition of energy is not limited to the above example and may be approximated using, for example, a waveform envelope. The frequency is the frequency of the noise removal signal. The RMS value is, for example, a value obtained by squaring the amplitude of the noise removal signal at each time point and using the square root.

The transmission data generator 305 receives, as inputs, the sensor ID, the time information, and the parameters concerning the feature values. The transmission data generator 305 generates transmission data including the input sensor ID, the time information, and the parameters concerning the feature values.

The memory 306 stores one or more pieces of transmission data generated using the transmission data generator 305. The memory 306 is, for example, a dual port random access memory (RAM).

The outputter 307 sequentially outputs one or more pieces of transmission data stored in the memory 306 to the structure evaluation apparatus 40. For example, when the signal processor 30 and the structure evaluation apparatus 40 are connected by wire, the outputter 307 outputs one or more pieces of transmission data stored in the memory 306 to the structure evaluation apparatus 40 via a wired cable. When the signal processor 30 and the structure evaluation apparatus 40 are connected wirelessly, the outputter 307 wirelessly outputs one or more pieces of transmission data stored in the memory 306 to the structure evaluation apparatus 40.

Referring to FIG. 1 again, the explanation will continue. The structure evaluation apparatus 40 includes a communicator 41, a controller 42, a storage 43, and a display 44.

The communicator 41 receives one or more pieces of transmission data output from the signal processor 30.

The controller 42 controls the entire structure evaluation apparatus 40. The controller 42 is constituted using a processor such as a central processing unit (CPU) and a memory. The controller 42 functions as an acquirer 421, an event extractor 422, a position locator 423, a distribution generator 424, a reference distribution generator 425, a distribution selector 426, a corrector 427, and an evaluator 428 by executing a program.

Some or all of the functional units such as the acquirer 421, the event extractor 422, the position locator 423, the distribution generator 424, the reference distribution generator 425, the distribution selector 426, the corrector 427, and the evaluator 428 are realized using hardware such as an application specific integrated circuit (ASIC), a programmable logic device (PLD), FPGA, or the like and may be realized through collaboration between software and hardware. The program may be recorded on a computer-readable recording medium. The computer-readable recording medium refers to, for example, a non-temporary storage medium such as a portable medium such as a flexible disk, a magneto-optical disk, a read only memory (ROM), and a CD-ROM and a storage device such as a hard disk built into a computer system. The program may be transmitted via a telecommunications line.

Some of the functions of the acquirer 421, the event extractor 422, the position locator 423, the distribution generator 424, the reference distribution generator 425, the distribution selector 426, the corrector 427, and the evaluator 428 do not need to be installed in the structure evaluation apparatus 40 in advance and may be realized by installing an additional application program into the structure evaluation apparatus 40.

The acquirer 421 acquires various information. For example, the acquirer 421 acquires transmission data received using the communicator 41. The acquirer 421 acquires transmission data for an evaluation target period. The acquirer 421 stores the acquired transmission data in the storage 43.

The event extractor 422 extracts transmission data for one event from the transmission data for the evaluation target period stored in the storage 43. An event represents an elastic wave generation event which occurred in the structure 50. An elastic wave generation event in the embodiment is, for example, the passage of the vehicle 10 on the road surface. The elastic wave generation event is not limited to the passage of the vehicle 10 on the road surface, but may also be the application of an impact on the structure 50. The impact on the structure 50 may be due to the collision of countless minute objects, or may be due to artificial acts such as spraying chemicals, watering, or a plurality of hits using a device. The countless minute objects are objects generated due to meteorological phenomena such as raindrops, hail, and snow pellets. It is preferable that the impact on the structure 50 be applied uniformly to a region to be evaluated.

When one event occurs, the plurality of sensors 20 will detect the elastic waves 11 at approximately the same time. That is to say, the storage 43 stores transmission data concerning the elastic waves 11 detected at approximately the same time. Thus, the event extractor 422 has a predetermined time window provided therein and extracts all transmission data whose arrival times are within the time window as transmission data for one event. The event extractor 422 outputs transmission data for one extracted event to the position locator 423.

A range Tw of the time window may be determined using an elastic wave propagation speed v and a maximum sensor interval dmax in the target structure 50 so that a range of Tw≥dmax/v is satisfied. In order to avoid false detection, it is preferable to set Tw to a value as small as possible. Thus, it is possible to substantially set Tw so that Tw=dmax/v is satisfied. The elastic wave propagation speed v may be obtained in advance.

The position locator 423 locates a position of the elastic wave source on the basis of sensor position information and a sensor ID and time information included in each of a plurality of pieces of transmission data extracted using the event extractor 422.

The sensor position information includes information concerning the installation position of the sensor 20 in association with the sensor ID. The sensor position information includes, for example, information concerning an installation position of the sensor 20 such as a latitude and a longitude or distances in horizontal and vertical directions from a position serving as a criterion of the structure 50. The position locator 423 holds the sensor position information in advance. The sensor position information may be stored in the position locator 423 at any time before the position locator 423 locates a position of the elastic wave source.

The sensor position information may be stored in the storage 43. **In** this case, the position locator 423 acquires sensor position information from the storage 43 at the timing of locating the position. A Kalman filter, a least squares method, or the like may be used for locating a position of the elastic wave source. The position locator 423 outputs position information of the elastic wave source obtained during the evaluation target period to the distribution generator 424.

The distribution generator 424 receives, as an input, pieces of position information of a plurality of elastic wave sources output from the position locator 423. The distribution generator 424 generates an elastic wave source distribution using the input position information of the plurality of elastic wave sources. The elastic wave source distribution represents a distribution in which elastic wave sources are located. More specifically, the elastic wave source distribution is a distribution of points indicating the position of the elastic wave source on virtual data representing the structure 50 to be evaluated in a state in which a horizontal axis indicates a distance in a traffic direction and a vertical axis indicates a distance in a width direction.

The distribution generator 424 generates an elastic wave source density distribution using the elastic wave source distribution. The elastic wave source density distribution represents a distribution in which, for each predetermined region in the elastic wave source distribution, density values obtained in accordance with the number of elastic wave sources included in each region are shown. Specifically, first, the distribution generator 424 divides the elastic wave source distribution into a plurality of regions by dividing it into predetermined sections. Subsequently, the distribution generator 424 calculates a density D of each region on the basis of the following Expression (1). Furthermore, the distribution generator 424 generates an elastic wave source density distribution by assigning the calculated density D value for each region to each region. In this way, the distribution generator 424 generates an elastic wave source density distribution by calculating the density D for the region to be evaluated. In Expression (1), $N_{ev}$ represents the number of elastic wave sources located in the region and S represents an area of the region.

$$D = \frac{N_{ev}}{S} \qquad \cdots (1)$$

The reference distribution generator 425 generates one or more reference distributions used for comparison with the elastic wave source density distribution. Specifically, the reference distribution generator 425 generates one or more reference distributions on the basis of a simulation which includes a random number. The random number is a value used for adding a random delay element to the arrival time of elastic waves, and takes, for example, a value of 0 to 1. The simulation used by the reference distribution generator 425 is a simulation for generating an elastic wave source density distribution based on one or more elastic wave sources on the basis of one or more elastic wave sources set virtually. The elastic wave source density distribution generated through this simulation is a reference distribution.

When performing simulation, the reference distribution generator 425 receives, from the outside, a speed condition indicating a propagation speed of the elastic waves of the target structure 50, a sensor condition indicating an installation position of a plurality of sensors, and an elastic wave source condition indicating the number of elastic wave sources of one or more. The reference distribution generator 425 calculates an arrival time from the positions of one or more elastic wave sources to each of the sensors by performing a simulation on the basis of each of the received conditions. At this time, the reference distribution generator 425 calculates an arrival time by adding a fluctuation in a time direction based on the random number to the theoretical time at which the elastic waves arrive from the position of each of the elastic wave sources to the position of each of the sensors. The fluctuation in the time direction based on random numbers is a random fluctuation in the time direction which is uniformly distributed within a predetermined time range. After that, the reference distribution generator 425 locates a position on the basis of the calculated arrival time difference to each of the sensors and generates an elastic wave source density distribution on the basis of the position location result. A method for locating a position is similar to the method used by the position locator 423 and a method for generating an elastic wave source density distribution is similar to the method used by the distribution generator 424.

The reference distribution generator 425 generates a plurality of reference distributions through the above method. For example, the reference distribution generator 425 uses different values of random numbers to generate a plurality of reference distributions obtained by adding a fluctuation in the time direction based on the random numbers. The reference distribution generator 425 stores a plurality of generated reference distributions in the storage 43 in association with feature values concerning location accuracy of the elastic wave source density distribution. The feature values concerning the location accuracy of the elastic wave source density distribution are an index representing a height of location accuracy of an elastic wave source density distribution and are, for example, an average value of indexes of uncertainty of the position location result obtained for each predetermined region of elastic wave source density distribution, a median value of index of uncertainties of the position location result obtained for each predetermined region of elastic wave source density distribution, or a location rate.

The index of uncertainty in the position location result is an index which indicates the accuracy of the position location. **In** addition, it means that the closer the value is to 0, the higher the accuracy of the position location. The method for calculating the index of uncertainty of the position location result will be described later. The location rate represents a ratio of the number of position locations to the elastic wave source and can be obtained, for example, by dividing the number of hits which contributed to the position location by the total number of hits or by dividing the number of position locations by the number of elastic wave sources.

The distribution selector 426 uses the elastic wave source density distribution generated using the distribution generator 424 to calculate feature values concerning the location accuracy of the elastic wave source density distribution. The distribution selector 426 selects at least one reference distribution from a plurality of reference distributions stored in the storage 43 on the basis of the calculated feature values concerning the location accuracy of the elastic wave source density distribution.

The corrector 427 corrects an elastic wave source density distribution on the basis of the elastic wave source density distribution generated using the distribution generator 424 and at least one reference distribution selected using the distribution selector 426. Here, explanation will be provided assuming that one reference distribution is selected. Specifically, the corrector 427 compares one selected reference distribution with the elastic wave source density distribution, performs a correction so that the higher the density of a region in one reference distribution, the lower the density of the region in the elastic wave source density distribution, and performs a correction so that the lower the density of a region in one reference distribution, the higher the density of the region in the elastic wave source density distribution. In this way, the corrector 427 compares the reference distribution with the elastic wave source density distribution for each region of a predetermined size at the same position and performs the corrector for each region of a predetermined size. The corrector 427 can also correct the elastic wave source density distribution by dividing it into a plurality of regions and performing calculations such as subtraction and division for each of the divided regions.

The evaluator 428 evaluates a state of deterioration of the structure 50 using the elastic wave source density distribution corrected using the corrector 427. For example, the evaluator 428 evaluates, as a healthy region, a region in which the elastic wave source density is the threshold or more in the elastic wave source density distribution after correction and evaluates, as a damaged region, a region in which the elastic wave source density is less than the threshold.

The storage 43 stores transmission data and a reference distribution table for the evaluation target period acquired using the acquirer 421. The reference distribution table is a table in which a plurality of records in which a reference distribution is associated with a feature value relating to the location accuracy of the reference distribution are registered. The storage 43 is constituted using a storage device such as a magnetic hard disk device or a semiconductor storage device.

The display 44 displays evaluation results under the control of the evaluator 428. For example, the display 44 may display the elastic wave source density distribution after correction as the evaluation result and may display a region which appears to be a damaged region in a different manner from other regions. In addition, under the control of the evaluator 428, the display 44 displays a group of wavy lines indicating the elastic wave source and the propagation path of the elastic waves to each of the sensors 20, for example, through a projection method. The display 44 is an image display device such as a liquid crystal display or an organic electro luminescence (EL) display. The display 44 may be an interface through which an image display device is connected to the structure evaluation apparatus 40. In this case, the display 44 generates a video signal for displaying the evaluation results and outputs the video signal to an image display device connected to the display 44 itself.

(Method for measuring elastic waves)

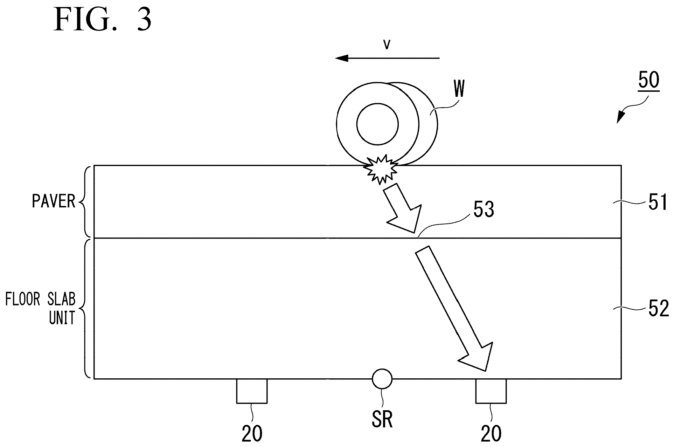

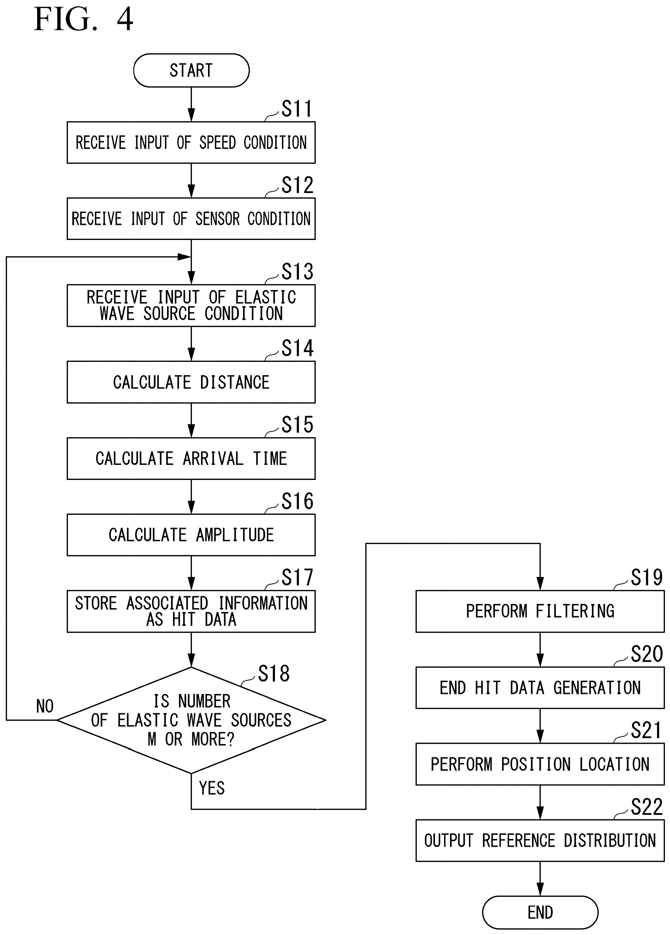

FIG. 3 is a diagram for explaining a method for measuring elastic waves in the first embodiment. In FIG. 4, as an example of the method for measuring elastic waves, evaluating internal damage of the structure 50 on the basis of elastic waves generated by the travel part W (for example, tire) of the vehicle 10 traveling on the road surface is considered. Here, a case in which the structure 50 is a road on which the vehicle 10 travels will be explained. The vehicle 10 is not particularly limited and may be a general travel vehicle. By using the elastic waves generated by the general vehicle 10, there is no need for vehicle regulations for inspection, contributing to improved convenience for a user. When the travel part W of the vehicle 10 comes into contact with the road surface, a load is applied to the road surface. Thus, elastic waves are generated in the structure 50. The generated elastic waves propagate inside the structure 50 and are detected using each of the sensors 20 installed on a surface (for example, the bottom surface) different from the road surface.

The structure 50 is typically constituted of a movable paver 51 and a floor slab unit 52 configured to support the paver 51. The paver 51 is, for example, asphalt, and the floor slab unit 52 is, for example, a concrete part. A typical thickness of the paver 51 is about 80 mm and a thickness of the floor slab unit 52 is about 180 mm to 230 mm. Elastic waves (amplitude $A_{src}$) generated due to the interaction between a travel part W of the vehicle 10 traveling on the road surface at a speed V and a surface of the paver 51 propagate toward the lower surface of the floor slab unit 52. Along the way, the elastic waves are partially reflected and partially transmitted at an interface 53 between the paver 51 and the floor slab unit 52 due to a difference in acoustic impedance between the paver 51 and the floor slab unit 52. Furthermore, the elastic waves which have propagated to the lower surface of the floor slab unit 52 reach the sensors 20 and are detected using the sensors 20. The plurality of sensors 20 are provided on the lower surface of the floor slab unit 52 and the elastic waves are detected using each of the sensors 20, each with a different time difference. A position of an elastic wave source SR is located on the basis of a time difference when detected using each of the sensors.

(Method for generating reference distribution)

A method for generating a reference distribution using the reference distribution generator 425 will be explained below using the flowchart shown in FIG. 4. FIG. 4 is a flowchart for describing a flow of the reference distribution generation process performed by the reference distribution generator 425 in the first embodiment. In FIG. 4, an example in which, assuming that a uniform elastic wave source exists, a reference distribution by simulating a theoretical elastic wave source density distribution when uncertainty is mixed into the arrival time determination of hit data is generated is explained.

The reference distribution generator 425 receives an input of a speed condition from the outside (Step S11). It is preferable that the input speed condition be the same as the propagation speed of the elastic waves of the target structure 50 to be evaluated. For example, when the target structure 50 to be evaluated is a concrete part, since the propagation speed of the elastic waves is about 3000 m/s, the reference distribution generator 425 receives an input of the propagation speed of the elastic waves with a value of 3000 m/s.

Subsequently, the reference distribution generator 425 receives an input of a sensor condition from the outside (Step S12). It is preferable that the input sensor condition be the same as the installation position of each of the sensors 20 installed in the target structure 50 to be evaluated. The reference distribution generator 425 may obtain, as a sensor condition, information concerning the installation position of the sensors 20 indicated by the sensor position information held by the position locator 423. Here, the number of the sensors is N (N is an integer of 3 or more) and the coordinates of the sensors are $S_i$ (i=0, ..., (N-1)).

Subsequently, the reference distribution generator 425 receives an input of an elastic wave source condition from the outside (Step S13). The number of elastic wave sources input as the elastic wave source condition is M and M is, for example, 10,000. First, the reference distribution generator 425 randomly places one $j^{th}$ (j is an integer of 1 or more) elastic wave source in a two-dimensional space. The reference distribution generator 425 calculates a distance from a position of a disposition elastic wave source to an $n^{th}$ sensor (Step S14). Here, it is assumed that the distance between the position of the $i^{th}$ sensor and the position of the $j^{th}$ elastic wave source is $d_{ij}$.

When a generation time and an amplitude of elastic waves in the $j^{th}$ elastic wave source are defined as a generation time $t_j$ and an amplitude $a_j$, the reference distribution generator 425 calculates an arrival time $TOA_{ij}$ and an amplitude $A_{ij}$ in the hit data detected by the $n^{th}$ sensor on the basis of the following Expressions (2) and (3) (Step S15 and Step S16). Here, $\alpha$ in Expression (2) is a distance attenuation coefficient (unit [dB/m]) representing the effect of signal attenuation due to a distance. As shown in Expression (3), the reference distribution generator 425 adds a noise term which is obtained by multiplying a time window width k which determines a maximum value of the inter-delay by a random number $R_{ij}$ which takes a random numerical value in the range of 0 to 1 for each hit data to reproduce the uncertainty in arrival time due to noise. It is convenient to use a pseudo-random number for $R_{ij}$. Thus, the reference distribution generator 425 adds a fluctuation in the time direction based on the random number to the theoretical time at which elastic waves arrive from the position of each elastic wave source to the position of each sensor.

$$A_{ij} = a_j - \alpha \cdot d_{ij} \qquad \cdots (2)$$

$$TOA_{ij} = t_j + \frac{d_{ij}}{v} + k \cdot R_{ij} \qquad \cdots (3)$$

A generation time $t_j$ of the $j^{th}$ elastic wave source in Expression (3) can be set, for example, as in Expression (4) which will be shown below.

$$t_{j+1} = t_j + T_s \qquad (j=0, 1 \cdots M-1)$$
$$t_0 = 0 \qquad \cdots (4)$$

Here, $T_s$ in Expression (4) is a constant and is set to, for example, 5 [ms] or the like. An amplitude $a_j$ of the $j^{th}$ elastic wave source can be set, for example, as shown in Expression (5) which will be shown below. $a_{src}$ in Expression (5) is not limited to a constant, but is set to, for example, 100 [dB] (0 dB=1 $\mu$V). $R_j$ is a random number or a pseudo-random number which takes a random numerical value within the range of 0 to 1 for each elastic wave source.

$$a_j = a_{src}\left(\frac{1 + R_j}{2}\right) \qquad \cdots (5)$$

The reference distribution generator 425 obtains an arrival time at which the elastic waves generated from one elastic wave source reach each of the sensors and amplitudes of the elastic waves through the above procedure. The reference distribution generator 425 associates the obtained arrival time information with the amplitude information of the elastic waves and stores them as hit data. After that, the reference distribution generator 425 determines whether the set number of set elastic wave sources is M or more (Step S17). It is preferable to set M to 10,000 or more, for example, since it is possible to suppress stochastic fluctuations which appear in the final reference distribution.

When the reference distribution generator 425 determines that the set number of elastic wave sources is not M or more (Step S17-NO), the reference distribution generator 425 performs the processes of Step S13 and the steps subsequent thereto again. In this case, the reference distribution generator 425 randomly places one elastic wave source in the two-dimensional space in the process of Step S13. In this way, the reference distribution generator 425 generates a hit data group corresponding to M elastic wave sources by repeatedly performing the processes from Step S13 to Step S16 until the number of elastic wave sources reaches M or more.

When the reference distribution generator 425 determines that the set number of elastic wave sources is M or more (Step S17-YES), the reference distribution generator 425 finishes generating hit data (Step S18). The reference distribution generator 425 performs filtering using amplitude on the hit data groups corresponding to the M stored elastic wave sources (Step S19). This is a process of excluding, from the hit data, data which do not satisfy a predetermined threshold in the hit data group. For example, the reference distribution generator 425 excludes hit data whose amplitude is less than 20 [dB] (0 dB=1 $\mu$V). By performing filtering like this, it is possible to simulate elastic waves which are highly attenuated and cannot be detected because they are mixed in with noise in an actual environment. When the filtering ends, the reference distribution generator 425 ends the hit data generation process (Step S20).

The reference distribution generator 425 performs a position location of the elastic wave source using the hit data group which is not excluded using the filtering (Step S21). Thus, a plurality of elastic wave sources are located. After that, the reference distribution generator 425 generates an elastic wave source distribution using position information of a plurality of elastic wave sources obtained using position location. The reference distribution generator 425 generates an elastic wave source density distribution using the elastic wave source distribution. In this way, one elastic wave source density distribution obtained by adding a fluctuation in the time direction based on one random number is generated as a reference distribution. The reference distribution generator 425 performs the process shown in FIG. 4 while changing the random number, thereby generating a plurality of reference distributions obtained by adding a fluctuation in the time direction based on the random number. The reference distribution generator 425 outputs the plurality of generated reference distributions (Step S22). For example, the reference distribution generator 425 stores the plurality of generated reference distributions in the storage 43.

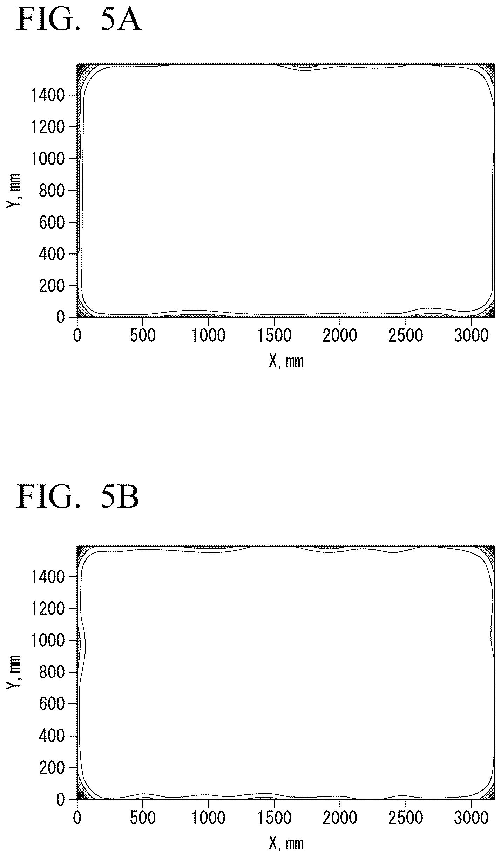

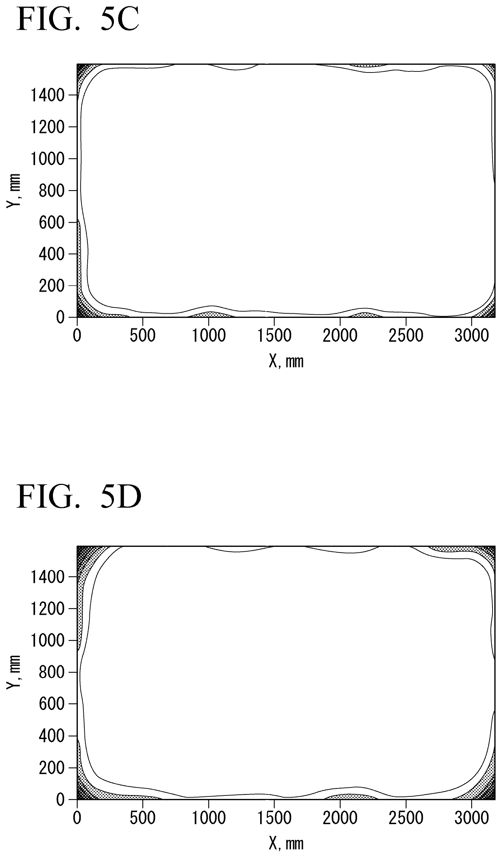

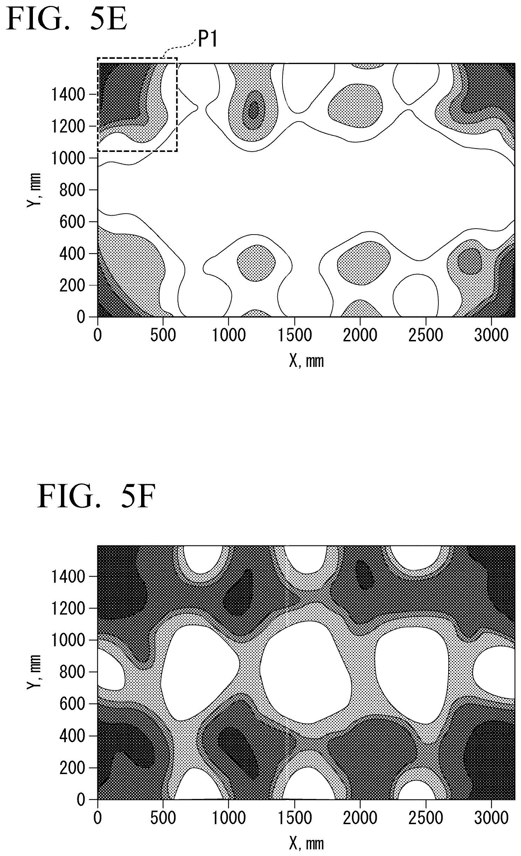

FIGS. 5A to 5F are diagrams showing an example of a reference distributions generated using the reference distribution generator 425 in the first embodiment. In FIGS. 5A to 5F, the darker the color, the lower the density, and the lighter the color, the higher the density. For example, a region shown in white in FIGS. 5A to 5F has the highest density. FIG. 5A shows a reference distribution obtained when time window width k=1 [$\mu$s] is satisfied, FIG. 5B shows a reference distribution obtained when time window width k=10 [$\mu$s] is satisfied, FIG. 5C shows a reference distribution obtained when time window width k=100 [$\mu$s] is satisfied, FIG. 5D shows a reference distribution obtained when time window width k=200 [$\mu$s] is satisfied, FIG. 5E shows a reference distribution obtained when time window width k=500 [$\mu$s] is satisfied, and FIG. 5F shows a reference distribution obtained when time window width k=1000 [$\mu$s] is satisfied.

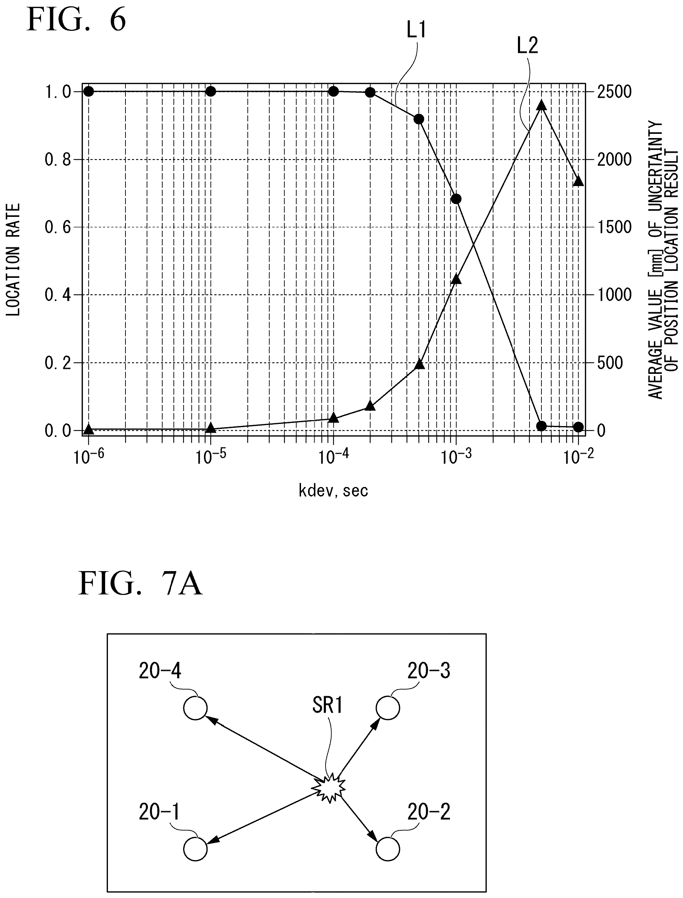

As shown in FIG. 5A to FIG. 5F, it can be seen that pseudo-patterns do not occur much in FIGS. 5A to 5D, whereas a pseudo pattern P1 occurs in FIGS. 5E and 5F. The region in which the pseudo pattern P1 occurs has a lower density (darker color) than the region in which the pseudo pattern P1 does not occur (white region). FIG. 6 shows a relationship between a time window width k and feature values concerning location accuracy of an elastic wave source density distribution. FIG. 6 shows an average value and location rate of uncertainty of position location result as an example of feature values concerning location accuracy of elastic wave source density distribution. A line segment L1 in FIG. 6 represents a change in location rate with respect to a value of a time window width k and a line segment L2 represents a change in an average value of uncertainty of position location result with respect to a value of time window width k.

In the range of the time window width k<1000 [$\mu$s], there is a certain correlationship between the time window width k and the average value of the uncertainty of the position location result and between the time window width k and the location rate. In addition, as the time window width k increases, the average value of the uncertainty of the position location result increases and the location rate decreases. The average value of the uncertainty of the position location result is a value indicating a degree of uncertainty of position location result. In addition, the smaller the value, the higher the accuracy of the position location result, and the larger the value, the more uncertain the position location result is. As described above, referring to FIGS. 5E and 5F, it can be seen that a clear pseudo pattern occurs when k=500 [μs] or more is satisfied. As shown in FIG. 6, when k=500 [μs] is satisfied, the average value of the uncertainty of the position location result corresponds to approximately 500 [mm]. In this way, it is possible to link position location feature values (in FIG. 6, the average value of the uncertainty of the position location result) and the reference distribution.

(Method for calculating index of uncertainty of position location result)

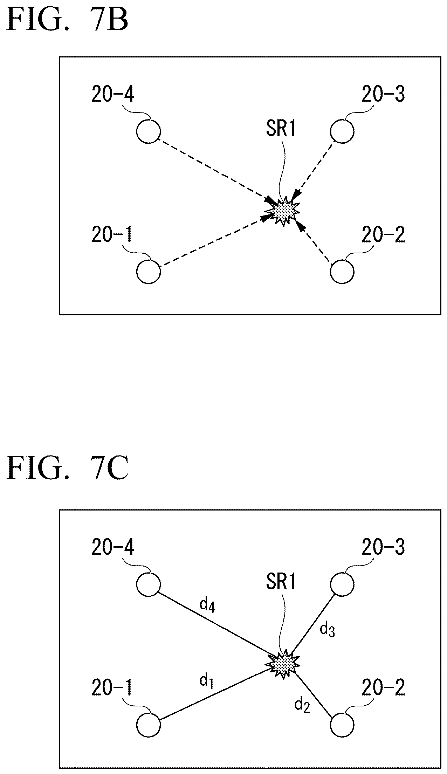

A method for calculating an index of uncertainty of the position location result in the first embodiment will be described below using FIGS. 7A to 7C. As shown in FIG. 7A, it is assumed that elastic waves are generated from a certain elastic wave source SR1 position. It is assumed that the position of the elastic wave source SR1 is unknown and the generation time of the elastic waves generated from the position of the elastic wave source SR1 is set to $t_0$. Elastic waves generated using the elastic wave source SR1 are detected using each of the sensors 20-1 to 20-4. Here, arrival times $t_1$ to $t_4$ when the elastic waves arrive at the sensors 20-1 to 20-4 is expressed as follows. $tt_1$, $tt_2$, $tt_3$, and $tt_4$ which will be shown below represent propagation times.

$$t_1 = t_0 + tt_1$$

$$t_2 = t_0 + tt_2$$

$$t_3 = t_0 + tt_3$$

$$t_4 = t_0 + tt_4$$

In FIG. 7A, assuming that the sensors 20 in which first detected elastic waves are the sensors 20-2, a time difference between the arrival time of the elastic waves to the sensors 20-2 which first detected elastic waves and the arrival time of elastic waves to the other sensors 20 is expressed as follows.

$$\Delta t_1 = t_1 - t_2$$

$$\Delta t_2 = t_2 - t_2 = 0$$

$$\Delta t_3 = t_3 - t_2$$

$$\Delta t_4 = t_4 - t_2$$

The above $\Delta t_1$ to $\Delta t_4$ are observation values of arrival time. The elastic wave source SR1 is located by performing position location on the basis of the observation values $\Delta t_1$ to $\Delta t_4$ of the arrival time. This elastic wave source SR1 represents a position of the elastic wave source estimated using the observation value. After that, as shown in FIG. 7C, distances d1 to d4 between each of the sensors 20 and the elastic wave source SR1 are calculated on the basis of the position of each of the sensors 20-1 to 20-4 and the position of elastic wave source SR1.

In FIG. 7C, assuming that the sensor 20 having the shortest distance from elastic wave source SR1 is the sensor 20-2, the distance difference between the elastic wave source SR1 and each of the sensors 20 is expressed as follows.

$$\Delta d_1 = d_1 - d_2$$

$$\Delta d_2 = d_2 - d_2 = 0$$

$$\Delta d_3 = d_3 - d_2$$

$$\Delta d_4 = d_4 - d_2$$

The above $\Delta d1$ to $\Delta d4$ are calculation values of the elastic wave source and each distance difference. The uncertainty of the position location result is calculated on the basis of the following Expression (6) using the observation value and the calculation value described above. V in Expression (6) represents a propagation speed of elastic waves.

$$\text{Uncertainty of position location result} = \sqrt{\frac{\sum(\Delta t_i \cdot V - \Delta d_i)^2}{(n-1)}} \quad [m] \qquad \cdots (6)$$

In Expression (6), when the observation value and the calculation value match, the value of the uncertainty in the position location result is 0. On the other hand, in Expression (6), the farther apart the observation value and the calculation value are, the higher the uncertainty value of position location result becomes. That is to say, in Expression (6), it means that the farther apart the observation value and the calculation value are, the lower the accuracy of the position location result becomes.

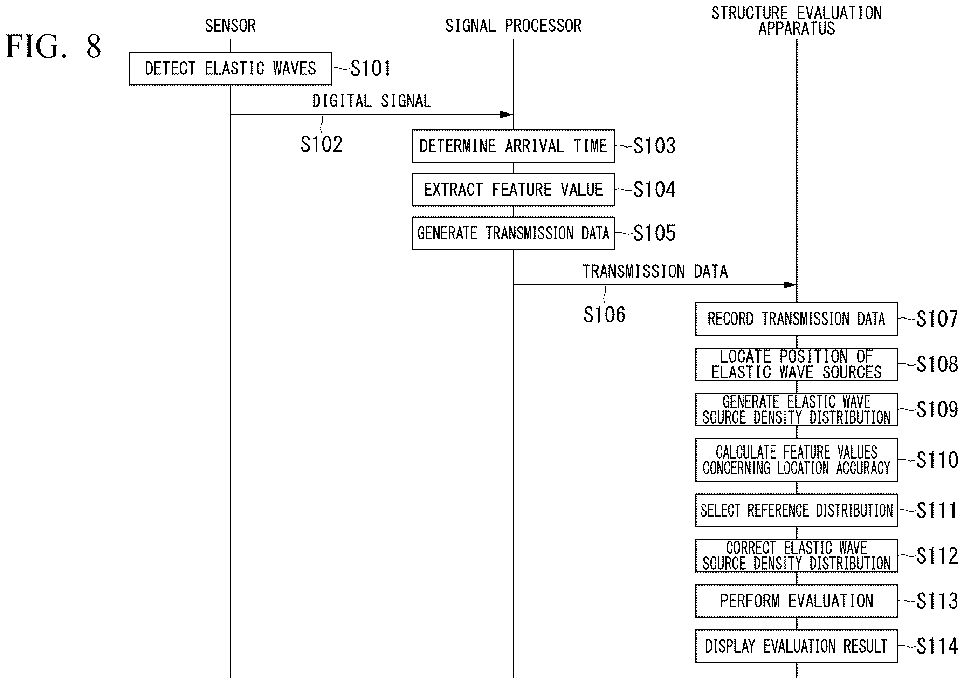

FIG. 8 is a sequence diagram showing a flow of the evaluation process of the state of deterioration using the structure evaluation system 100 in the first embodiment. The process in FIG. 8 is performed, for example, in response to the vehicle 10 traveling the target structure 50 to be evaluated.

If the vehicle 10 travels through the target structure 50 to be evaluated, the travel part of the vehicle 10 comes into contact with the road surface. Thus, the elastic waves 11 are generated in the structure 50. Each of the plurality of sensors 20 detects the elastic waves 11 generated in the structure 50 (Step S101). Each of the plurality of sensors 20 converts the detected elastic waves 11 into an electrical signal and outputs it to the signal processor 30 (Step S102). Electrical signals output from each of the plurality of sensors 20 are amplified by an amplifier (not shown). The amplified electrical signal is converted into a digital signal using an A/D converter.

The signal processor 30 inputs a digital signal output from an A/D converter. The arrival time determiner 303 of the signal processor 30 determines an arrival time of each of the elastic waves 11 (Step S103). Specifically, the arrival time determiner 303 determines an elastic wave arrival time using the clock input while the first gate signal is input. The arrival time determiner 303 outputs the determined elastic wave arrival time to the transmission data generator 305 as time information. The arrival time determiner 303 performs this process on all input digital signals.

The feature value extractor 304 of the signal processor 30 uses the noise removal signal which is a digital signal input while the first gate signal is input to extract feature values of the noise removal signal (Step S104). The feature value extractor 304 outputs parameters concerning the extracted feature values to the transmission data generator 305. The transmission data generator 305 generates transmission data including the sensor ID, the time information, and the parameters concerning the feature values (Step S105). The outputter 307 sequentially outputs transmission data to the structure evaluation apparatus 40 (Step S106).

The communicator 41 of the structure evaluation apparatus 40 receives transmission data output from the signal processor 30. The acquirer 421 acquires the transmission data received using the communicator 41. The acquirer 421 records the acquired transmission data in the storage 43 (Step S107). The event extractor 422 extracts transmission data for one event from the transmission data stored in the storage 43. The event extractor 422 outputs transmission data for one extracted event to the position locator 423.

The position locator 423 locates a position of the elastic wave source on the basis of the sensor ID and the time information included in the transmission data output from the event extractor 422 and the sensor position information held in advance (Step S108). Specifically, first, the position locator 423 calculates a difference in arrival time of the elastic waves 11 to each of the plurality of sensors 20. Subsequently, the position locator 423 locates a position of the elastic wave source using the sensor position information and the information on the difference in arrival time.

The position locator 423 performs the process of Step S108 every time one event of transmission data is output from the event extractor 422 during the measurement period. Thus, the position locator 423 locates positions of a plurality of elastic wave sources. The position locator 423 outputs pieces of position information of the plurality of elastic wave sources to the distribution generator 424. The distribution generator 424 generates an elastic wave source distribution using the pieces of position information of the plurality of elastic wave sources output from the position locator 423. Specifically, the distribution generator 424 generates an elastic wave source distribution by plotting the positions of the elastic wave sources indicated by the obtained pieces of position information of the plurality of elastic wave sources on virtual data.

The distribution generator 424 generates an elastic wave source density distribution using the generated elastic wave source distribution (Step S109). Specifically, first, the distribution generator 424 divides the elastic wave source distribution into a plurality of areas by dividing it into predetermined sections. Subsequently, the distribution generator 424 calculates a density of the elastic wave sources for each area. Furthermore, the distribution generator 424 generates an elastic wave source density distribution by assigning, to each area, the calculated elastic wave source density value for each area. The distribution generator 424 outputs the generated elastic wave source density distribution to the distribution selector 426 and the corrector 427.

The distribution selector 426 uses the elastic wave source density distribution output from the distribution generator 424 to calculate feature values concerning the location accuracy of the elastic wave source density distribution (Step S110). For example, the distribution selector 426 calculates an average value of the index of uncertainties of the position location result obtained for each predetermined region of the elastic wave source density distribution, as feature values concerning the location accuracy of the elastic wave source density distribution. In this case, the distribution selector 426 divides the elastic wave source density distribution into a plurality of regions. The distribution selector 426 calculates an uncertainty value of the position location result for each divided region. Furthermore, the distribution selector 426 calculates an average value of the uncertainty values of the position location result calculated for each region.

The distribution selector 426 selects a reference distribution on the basis of the calculated average value of the index of uncertainties of the position location result and the reference distribution table stored in the storage 43 (Step S110). Specifically, the distribution selector 426 refers to the reference distribution table and selects a record in which the average value of the index of uncertainties of the position location result which is closest to the calculated average value of the index of uncertainty of the position location result is registered. The distribution selector 426 selects a reference distribution registered in the selected record. The distribution selector 426 outputs the selected reference distribution to the corrector 427.

The corrector 427 receives, as inputs, a reference distribution output from the distribution selector 426 and an elastic wave source density distribution output from the distribution generator 424. The corrector 427 corrects an input elastic wave source density distribution on the basis of the reference distribution (Step S112). The corrector 427 outputs the elastic wave source density distribution after correction to the evaluator 428.

The evaluator 428 evaluates a state of deterioration of the structure using the elastic wave source density distribution after correction (Step S113). The evaluator 428 outputs the evaluation results to the display 44. The display 44 displays the evaluation results output from the evaluator 428 (Step S114). For example, the display 44 may display the elastic wave source density distribution after correction as the evaluation result and may display a region which appears to be a damaged region in a different manner from other regions.

The structure evaluation system 100 constituted as described above evaluates damage to the structure 50 on the basis of one or more reference distribution generated on the basis of a simulation including a random number and an elastic wave source density distribution. The reference distribution is a distribution obtained by adding a fluctuation in the time direction based on random numbers. That is to say, the reference distribution is a distribution in which the situation of the actual environment is included. The structure evaluation apparatus 40 performs an evaluation based on an elastic wave source density distribution, rather than using only the elastic wave source density distribution, based on the actual environment situation shown by the reference distribution. Thus, it becomes possible to evaluate the state of deterioration of a structure which is more in line with the actual environment. For this reason, it becomes possible to suppress a decrease in the evaluation accuracy of the state of deterioration of the structure.

(Modified example of first embodiment)

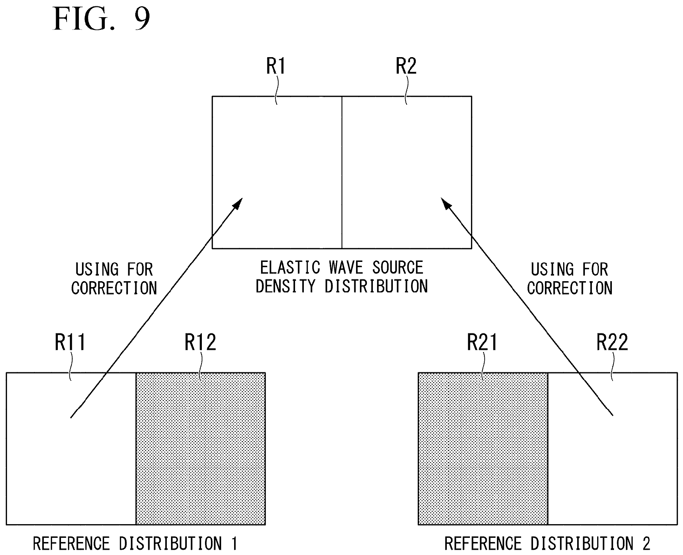

In the embodiment described above, the distribution selector 426 shows the constitution of selecting one reference distribution, but may be configured to select a plurality of reference distributions. An overview of the processing when the system is constituted in this way will be explained using FIG. 9. FIG. 9 is a diagram for explaining an overview of the processing performed by the distribution selector 426 in the modified example of the first embodiment. First, the distribution selector 426 generates a plurality of divided regions by dividing the elastic wave source density distribution into a plurality of regions. For example, as shown in the upper diagram of FIG. 9, it is assumed that the distribution selector 426 divides the elastic wave source density distribution into two distributions on the basis of the distance in the width direction. Thus, division regions R1 and R2 based on the elastic wave source density distribution are generated. This is just an example and the direction and the number of divisions in which the elastic wave source density distribution is divided are not particularly limited.

Subsequently, the distribution selector 426 calculates feature values concerning location accuracy for each generated division region R1, R2. It is assumed that, in the reference distribution table of the storage 43, division regions of the reference distribution according to the number of divisions of the reference distribution are associated with feature values relating to location accuracy for each division region.

The distribution selector 426 selects a different reference distribution for each division region R1, R2 on the basis of the calculated feature values concerning the location accuracy of each division region R1, R2 and the reference distribution table.

Specifically, the distribution selector 426 compares the division regions of the elastic wave source density distribution with the division region of the reference distribution within the same range. For example, the distribution selector 426 compares the feature values relating to the location accuracy of the division region R1 of the elastic wave source density distribution with the feature values relating to the location accuracy of the division region of the reference distribution which is within the same range as the division region R1 of the elastic wave source density distribution. Although there are Reference Distribution 1 and Reference Distribution 2 in the example shown in FIG. 9, the distribution selector 426 compares the feature values concerning the location accuracy of the division region R1 of the elastic wave source density distribution with the feature values concerning the location accuracy of the region R11 of Reference Distribution 1 and compares the feature values concerning the location accuracy of the division region R1 of the elastic wave source density distribution with the feature values concerning the location accuracy of the region R21 of Reference Distribution 1. Similarly, the distribution selector 426 compares the feature values concerning the location accuracy of the division region R2 of the elastic wave source density distribution with the feature values concerning the location accuracy of the region R12 of Reference Distribution 1 and compares the feature values concerning the location accuracy of the division region R2 of the elastic wave source density distribution with the feature values concerning the location accuracy of the region R22 of Reference Distribution 2.

Here, it is assumed that the distribution selector 426 determines that the feature values concerning the location accuracy of the division region R1 of the elastic wave source density distribution are close to the feature values concerning the location accuracy of the region R11 of Reference Distribution 1 and determines that the feature values concerning the location accuracy of the division region R2 of the elastic wave source density distribution are close to the feature values concerning the location accuracy of the region R22 of Reference Distribution 2. In this case, the distribution selector 426 selects the region R11 of Reference Distribution 1 as a reference distribution to be used for correction of the division region R1 of the elastic wave source density distribution and selects the region R22 of Reference Distribution 2 as the reference distribution used for correction of the division region R2. The distribution selector 426 outputs the selected region R11 of Reference Distribution 1 and the selected region R22 of Reference Distribution 2 to the corrector 427.

The corrector 427 receives, as inputs, the region R11 of Reference Distribution 1 and the region R22 of Reference Distribution 2 output from the distribution selector 426 and the elastic wave source density distribution output from the distribution generator 424. The corrector 427 corrects the input elastic wave source density distribution on the basis of the region R11 of Reference Distribution 1 and the region R22 of Reference Distribution 2. For example, the corrector 427 corrects the division region R1 of the elastic wave source density distribution on the basis of the region R11 of Reference Distribution 1 and corrects the division region R2 of the elastic wave source density distribution on the basis of the region R22 of Reference Distribution 2.

(Second embodiment)

In a second embodiment, a constitution in which an appropriate reference distribution is selected through template matching will be explained.

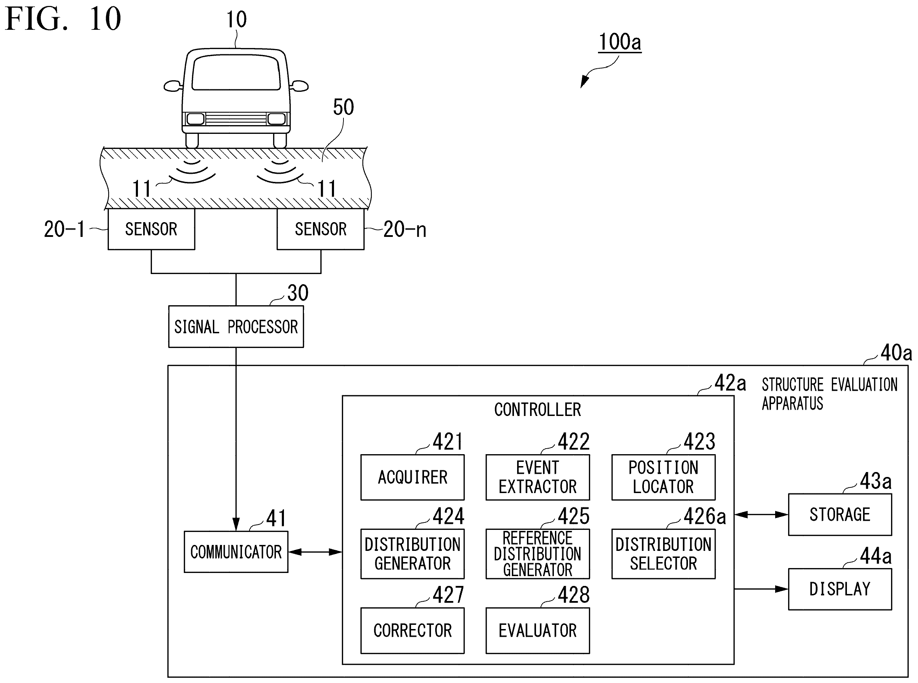

FIG. 10 is a diagram showing a constitution of a structure evaluation system 100a in the second embodiment. The structure evaluation system 100a is used for evaluating the soundness of a structure 50. The structure evaluation system 100a includes a plurality of sensors 20-1 to 20-n (n is an integer of 2 or more), a signal processor 30, and a structure evaluation apparatus 40a. The constitutions of the structure evaluation system 100a and the structure evaluation system 100 differ in that the structure evaluation system 100a includes the structure evaluation apparatus 40a instead of the structure evaluation apparatus 40. A constitution other than the structure evaluation apparatus 40a is the same as the structure evaluation system 100. Differences will be mainly explained below.

The structure evaluation apparatus 40a includes a communicator 41, a controller 42a, a storage 43a, and a display 44. The controller 42a controls the entire structure evaluation apparatus 40a. The controller 42a is constituted using a processor such as a CPU and a memory. By executing a program, the controller 42a functions as an acquirer 421, an event extractor 422, a position locator 423, a distribution generator 424, a reference distribution generator 425, a distribution selector 426a, a corrector 427, and an evaluator 428.

The storage 43a stores transmission data and a reference distribution table for an evaluation target period acquired using the acquirer 421. The reference distribution table in the second embodiment is a table in which a plurality of reference distributions generated using the reference distribution generator 425 for each of different random numbers are registered. The storage 43a is constituted using a storage device such as a magnetic hard disk device or a semiconductor storage device.

The distribution selector 426a selects at least one reference distribution from a plurality of reference distributions on the basis of a degree of similarity between an elastic wave source density distribution generated using the distribution generator 424 and a plurality of reference distributions registered in the reference distribution table stored in the storage 43. More specifically, the distribution selector 426a calculates a degree of similarity between the plurality of reference distributions and the elastic wave source density distribution by performing template matching between the plurality of reference distributions and the elastic wave source density distribution and selects a reference distribution having the highest degree of similarity from among a plurality of reference distributions. The distribution selector 426a outputs the selected reference distribution to the corrector 427.

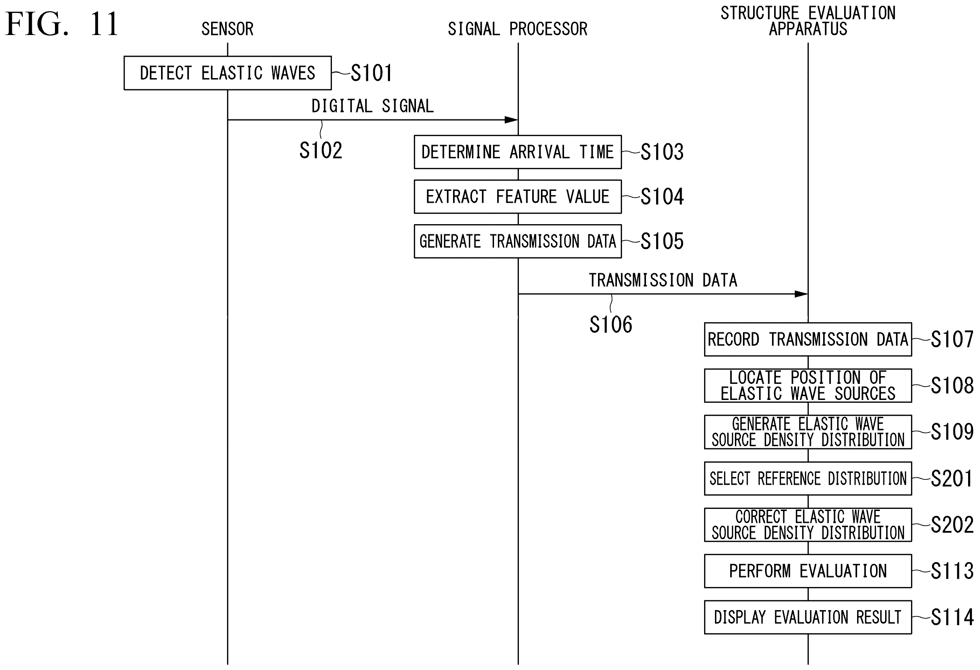

FIG. 11 is a sequence diagram showing a flow of an evaluation process of a state of deterioration using the structure evaluation system 100a in the second embodiment. The process in FIG. 11 is performed, for example, in response to the vehicle 10 traveling the target structure 50 to be evaluated. In FIG. 11, the same processes as those in FIG. 8 are denoted by the same reference numerals as those in FIG. 8 and an explanation thereof will be omitted.

When the processing from Step S101 to Step S109 is completed, the distribution selector 426a selects one or more reference distributions on the basis of the elastic wave source density distribution output from the distribution generator 424 and the reference distribution table stored in the storage 43a (Step S201). Specifically, the distribution selector 426a calculates a degree of similarity for each reference distribution by performing pattern matching with each reference distribution registered in the reference distribution table using elastic wave source density distribution. The distribution selector 426a selects a reference distribution having the highest degree of similarity. The distribution selector 426a outputs the selected reference distribution to the corrector 427.

The corrector 427 receives, as inputs, a reference distribution output from the distribution selector 426a and an elastic wave source density distribution output from the distribution generator 424. The corrector 427a corrects the input elastic wave source density distribution on the basis of the reference distribution (Step S202). The corrector 427 outputs the elastic wave source density distribution after correction to the evaluator 428.

According to the structure evaluation system 100a constituted as described above, it is possible to obtain the same effect as the first embodiment using a method different from that of the first embodiment.

(Modified example of second embodiment)

In the embodiment described above, the distribution selector 426a shows the constitution of selecting one reference distribution, but may be constituted to select a plurality of reference distributions. An overview of the processing when a constitution is provided in this way will be explained. Here, explanation will be provided using FIG. 9. The distribution selector 426a generates a plurality of division regions by dividing the elastic wave source density distribution into a plurality of regions. For example, as shown in the upper part of FIG. 9, it is assumed that the distribution selector 426a divides the elastic wave source density distribution into two distributions on the basis of the distance in the width direction. Thus, division regions R1 and R2 based on the elastic wave source density distribution are generated. This is just an example and the direction and the number of divisions in which the elastic wave source density distribution is divided are not particularly limited. It is assumed that a plurality of reference distributions are registered in the reference distribution table of the storage 43a.

The distribution selector 426a selects a different reference distribution for each division region R1, R2 on the basis of each of the division regions R1, R2 and the reference distribution table. Specifically, the distribution selector 426a performs pattern matching between the division region of the elastic wave source density distribution and the region of the same range as the division region of the elastic wave source density distribution in the reference distribution. For example, the distribution selector 426a performs pattern matching between the division region R1 of the elastic wave source density distribution and the regions R11 and R21 of the reference distribution which are in the same range as the division region R1 of the elastic wave source density distribution. Similarly, the distribution selector 426a performs pattern matching between the division region R2 of the elastic wave source density distribution and the regions R12 and R22 of the reference distribution which are in the same range as the division region R2 of the elastic wave source density distribution.

Here, it is assumed that the distribution selector 426a determines that a degree of similarity between the division region R1 of the elastic wave source density distribution and the region R11 of Reference Distribution 1 is highest and the degree of similarity between the division region R2 of the elastic wave source density distribution and the region R22 of Reference Distribution 2 is highest. In this case, the distribution selector 426a selects the region R11 of Reference Distribution 1 as the reference distribution used for correction of the division region R1 of the elastic wave source density distribution and selects the region R22 of Reference Distribution 2 as the reference distribution used for correction of the division region R2. The distribution selector 426 outputs the selected region R11 of Reference Distribution 1 and the selected region R22 of Reference Distribution 2 to the corrector 427.

The corrector 427 receives, as inputs, the region R11 of Reference Distribution 1 and the region R22 of Reference Distribution 2 output from the distribution selector 426a and the elastic wave source density distribution output from the distribution generator 424. The corrector 427 corrects the input elastic wave source density distribution on the basis of the region R11 of Reference Distribution 1 and the region R22 of Reference Distribution 2. For example, the corrector 427 corrects the division region R1 of the elastic wave source density distribution on the basis of the region R11 of Reference Distribution 1 and corrects the division region R2 of the elastic wave source density distribution on the basis of the region R22 of Reference Distribution 2.

(Modified Example 1 common to each embodiment)

Each of the above embodiments shows a constitution in which the plurality of sensors 20-1 to 20-n are connected to one signal processor 30, 30a, 30b. The structure evaluation system 100, 100a, 100b may include a plurality of the signal processors 30, 30a, 30b and each of the sensors 20 may be connected to a different signal processor 30, 30a, and 30b.

(Modified Example 2 common to each embodiment)

A part or all of the functional units included in the structure evaluation apparatuses 40 and 40b may be included in other devices. For example, the display 44 provided in the structure evaluation apparatuses 40 and 40b may be provided in another device. When a constitution is provided in this way, the structure evaluation apparatuses 40 and 40b transmit the evaluation results to another device including the display 44. Another device including the display 44 displays the received evaluation results.

(Modified Example 3 common to each embodiment)

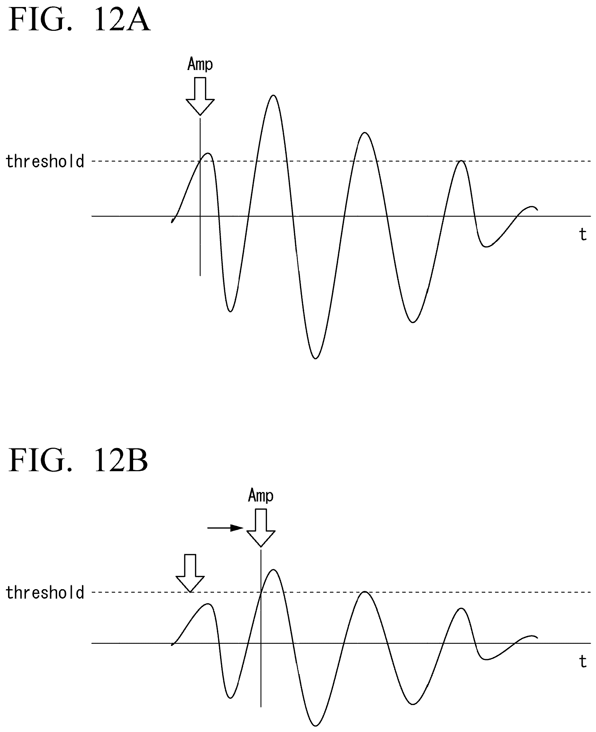

In each of the above-mentioned embodiments, a constitution in which a reference distribution is generated on the basis of a simulation in which a delay corresponding to a random number is provided to the arrival time of elastic waves is shown. On the other hand, in the simulation performed by the reference distribution generator 425, a reference distribution may be generated by including noise according to a random number in the vibration width direction for the theoretical amplitude of elastic waves reaching each sensor set in the simulation. A specific explanation will be provided using FIGS. 12A and 12B. FIG. 12A is a diagram showing a detection example of elastic waves of each sensor in the simulation of each embodiment described above and FIG. 12B is a diagram showing a detection example of elastic waves of each sensor in a simulation in a modified example of each embodiment. In FIGS. 12A and 12B, the vertical axis represents amplitude and the horizontal axis represents time.

As shown in FIG. 12A, each of the sensors on the simulation detects elastic waves at the timing at which the amplitude of the elastic waves exceeds a threshold. Here, if noise is added to the elastic waves, the amplitude of the elastic waves becomes lower as shown in FIG. 12B compared to the amplitude of the elastic waves shown in FIG. 12A. As a result, even when the threshold for detecting elastic waves is the same, the amplitude of elastic waves is lower in FIG. 12B. Thus, the timing at which the amplitude of elastic waves exceeds the threshold is delayed compared to FIG. 12A. That is to say, in FIG. 12B, the timing of detecting elastic waves is delayed compared to FIG. 12A. This means that, in each embodiment described above, a delay corresponding to the random number is provided to the arrival time of elastic waves. Therefore, the reference distribution generator 425 may add noise to the elastic waves reaching each of the sensors in the simulation to reduce the amplitude in accordance with a random number and may generate a reference distribution to match the actual environment.

(Modified Example 4 common to each embodiment)

The first embodiment shows a constitution in which a reference distribution is selected on the basis of feature values relating to location accuracy and the second embodiment shows a constitution in which the reference distribution is selected on the basis of a degree of similarity through pattern matching. A constitution may be provided so that a reference distribution is selected by combining the first embodiment and the second embodiment. When the constitution is provided in this way, the structure evaluation apparatus 40, 40a may be constituted to use either the first embodiment or the second embodiment as the reference distribution selection method.

Also, the structure evaluation apparatuses 40 and 40a may use a different reference distribution selection method for each division region obtained by dividing the elastic wave source density distribution. For example, if explanation is provided using the example shown in FIG. 9, the structure evaluation apparatuses 40 and 40a may select different reference distributions for each division region by using the selection method shown in the first embodiment (selection method based on feature values relating to location accuracy) for the division region R1 of the elastic wave source density distribution and using the selection method (selection method based on pattern matching) shown in the second embodiment for the division region R2 of the elastic wave source density distribution.

According to at least one of the embodiments explained above, it is possible to suppress a decrease in evaluation accuracy of the state of deterioration of the structure by providing the evaluator 428 which evaluates damage to the structure 50 on the basis of the plurality of sensors 20 which detect elastic waves generated inside the structure 50, the position locator 423 which locates the position of one or more elastic wave sources on the basis of the plurality of elastic waves detected using each of the plurality of sensors 20, the distribution generator 424 which generates an elastic wave source density distribution on the basis of the position location result of one or more elastic wave sources using the position locator 423, the one or more reference distributions generated on the basis of the simulation including the random number, and the elastic wave source density distribution generated using the distribution generator 424.

While certain embodiments have been described, these embodiments have been presented by way of example only, and are not intended to limit the scope of the invention as defined with the appended claims.

**Claims**

1. A structure evaluation system (100, 100a), comprising:

   at least three sensors (20-1 to 20-n) configured to detect elastic waves generated inside a structure;
   a position locator (423) configured to locate positions of one or more elastic wave generation sources by calculating a difference in arrival time of the elastic waves when detected by each of the at least three sensors (20-1 to 20-n) by using arrival time of the plurality of elastic waves when detected by each of the at least three sensors and information concerning an installation position of the at least three sensors (20-1 to 20-n); and
   a distribution generator (424) configured to generate an elastic wave source density distribution representing a density distribution of the one or more elastic wave generation sources on the basis of a position location result of the one or more elastic wave generation sources obtained by the position locator;
   **characterized in that**
   a reference distribution generator (425) configured to generate one or more reference distributions on the basis of a simulation including a random number, wherein the simulation being a simulation which generates the elastic wave source density distribution representing a density distribution of the one or more elastic wave generation sources as the one or more reference distributions on the basis of virtually set one or more elastic wave generation sources,
   a corrector (427) configured to correct the elastic wave source density distribution on the basis of the one or more reference distributions, and
   an evaluator (428) configured to evaluate as a damaged region, a region in which density in the elastic wave source density distribution corrected by the corrector (427) is less than a threshold.

2. The structure evaluation system (100, 100a) according to claim 1,

   wherein the simulation is a simulation which generates an elastic wave source density distribution representing a density distribution of the one or more elastic wave generation sources as the one or more reference distributions on the basis of one or more virtually set elastic wave generation sources, and
   the reference distribution generator (425) generates the one or more reference distributions by receiving, as a condition for performing the simulation, an input of information concerning a generation source of one or more elastic waves and information concerning installation positions of at least three sensors and performing the simulation by adding a fluctuation in a time direction based on a random number to a theoretical time of each received elastic wave reaching each sensor from the generation source or adding noise that reduces an amplitude for a theoretical amplitude reaching each sensor from the generation source of each elastic wave, wherein the fluctuation in a time direction based on a random number is a noise term which is obtained by multiplying a time window width which determines a maximum value of the inter-delay by a random number which takes a random numerical value.

3. The structure evaluation system (100, 100a) according to claim 2, wherein the fluctuation in the time direction based on the random number is a random fluctuation in the time direction which is uniformly distributed within a predetermined time range, and
   the reference distribution generator (425) generates the one or more reference distributions by adding a fluctuation in the time direction based on the random number which differs for each of the predetermined time ranges.

4. The structure evaluation system (100, 100a) according to any one of claims 1 to 3,
   wherein the corrector (427) compares the one or more reference distributions with the elastic wave source density distribution for each region of a predetermined size at a same position and, performs correction so that the higher the density of the region in the one or more reference distributions, the lower the density of the region in the elastic wave source density distribution, and performs correction so that the lower the density of the region in the one or more reference distributions, the higher the density of the region in the elastic wave source density distribution.

5. The structure evaluation system (100) according to claim 4, wherein the one or more reference distributions are a plurality of reference distributions generated under different conditions, and

the structure evaluation system (100) further comprises a distribution selector (426) configured to select, from among the plurality of reference distributions, at least one reference distribution having a value closest to feature values concerning location accuracy of the elastic wave source density distribution, and

the corrector (427) corrects the elastic wave source density distribution using the at least one reference distribution selected by the distribution selector (426).

6. The structure evaluation system (100) according to claim 5, wherein the feature values concerning the location accuracy are any of an average value of an index of uncertainty of a position location result within a predetermined region of the elastic wave source density distribution, a median value of the index of uncertainty of the position location result, and a location rate within a predetermined region of the elastic wave source density distribution

wherein the index of uncertainty of a position location result is an index which indicates an accuracy of the position location and,

wherein the location rate represents a ratio of a number of position locations to a elastic wave generation source.

7. The structure evaluation system (100) according to claim 5, wherein the distribution selector (426) generates a plurality of division regions by dividing the elastic wave source density distribution into a plurality of regions and selects for each division region a different reference distribution having a value closest to feature values concerning location accuracy of each division region.

8. The structure evaluation system (100a) according to claim 4, wherein the one or more reference distributions are a plurality of reference distributions generated under different conditions, and

the structure evaluation system (100a) further comprises a distribution selector (426a) configured to select, from among the plurality of reference distributions, at least one reference distribution having a highest degree of similarity in template matching to the elastic wave source density distribution, and

the corrector (427) corrects the elastic wave source density distribution using at least one reference distribution selected using the distribution selector (426a).

9. The structure evaluation system (100a) according to claim 8, wherein the distribution selector (426a) calculates a degree of similarity between the plurality of reference distributions and the elastic wave source density distribution by performing template matching between the plurality of reference distributions and the elastic wave source density distribution and selects a reference distribution having a highest degree of similarity from among the plurality of reference distributions.

10. The structure evaluation system (100a) according to claim 8, wherein the distribution selector (426a) generates a plurality of division regions by dividing the elastic wave source density distribution into a plurality of regions and selects for each division region a different reference distribution having a highest degree of similarity in template matching to each generated division region.

11. A structure evaluation method, comprising:

locating (S108) positions of one or more elastic waves generation sources by calculating a difference in arrival time of a plurality of elastic waves when detected by each of the plurality of elastic waves detected using at least three sensors which detect elastic waves generated inside a structure by using arrival time of the plurality of elastic waves when detected by each of the at least three sensors and information concerning an installation position of the at least three sensors; and

generating (S109) an elastic wave source density distribution representing a density distribution of the one or more generation source elastic waves on the basis of a position location result of the one or more generation source elastic waves;

**characterized in that**

generating one or more reference distributions on the basis of a simulation including a random number, wherein the simulation being a simulation which generates the elastic wave source density distribution representing a density distribution of the one or more elastic wave generation sources as the one or more reference distributions on the basis of virtually set one or more elastic wave generation sources, and

correcting the elastic wave source density distribution on the basis of the one or more reference distributions,

evaluating (S113) as a damaged region, a region in which density in the elastic wave source density distribution corrected is less than a threshold.

**Patentansprüche**

1. Strukturevaluierungssystem (100, 100a), umfassend:

   mindestens drei Sensoren (20-1 bis 20-n), die konfiguriert sind, im Inneren einer Struktur erzeugte elastische Wellen zu detektieren;
   einen Positionsbestimmer (423), der konfiguriert ist, die Positionen einer oder mehrerer Erzeugungsquellen elastischer Wellen zu lokalisieren, durch Berechnen einer Differenz in der Ankunftszeit der elastischen Wellen, wenn diese von jedem der mindestens drei Sensoren (20-1 bis 20-n) detektiert werden, wobei er die Ankunftszeiten der mehreren elastischen Wellen, bei Detektion von jedem der mindestens drei Sensoren, sowie Informationen über die Installationsposition der mindestens drei Sensoren (20-1 bis 20-n) verwendet; und
   einen Verteilungsgenerator (424), der so konfiguriert ist, dass er eine Elastikwellenquellendichteverteilung erzeugt, die eine Dichteverteilung der einen oder mehreren Elastikwellenquellen repräsentiert, auf Basis eines Positionsbestimmungsergebnisses der einen oder mehreren Elastikwellen-Erzeugungsquellen, das durch den Positionsbestimmer ermittelt wurde;
   **gekennzeichnet durch**
   einen Referenzverteilungsgenerator (425), der konfiguriert ist, eine oder mehrere Referenzverteilungen auf Basis einer Simulation unter Einbeziehung einer Zufallszahl zu erzeugen, wobei die Simulation eine Simulation ist, die die Elastikwellenquellendichteverteilung, die eine Dichteverteilung der einen oder mehreren Elastikwellen-Erzeugungsquellen darstellt, als die eine oder mehreren Referenzverteilungen auf Basis virtuell festgelegter einer oder mehrerer Elastikwellen-Erzeugungsquellen erzeugt,
   einen Korrektor (427), der konfiguriert ist, die Elastikwellenquellendichteverteilung auf Basis der einen oder mehreren Referenzverteilungen zu korrigieren, und
   einen Evaluator (428), der konfiguriert ist, eine Region, in der die Dichte in der durch den Korrektor (427) korrigierten Elastikwellenquellendichteverteilung unter einem Schwellenwert liegt, als beschädigte Region zu evaluieren.

2. Strukturevaluierungssystem (100, 100a) gemäß Anspruch 1,

   wobei die Simulation eine Simulation ist, die eine Elastikwellenquellendichteverteilung erzeugt, die eine Dichteverteilung der einen oder mehreren Elastikwellenerzeugungsquellen als die eine oder mehreren Referenzverteilungen auf Basis einer oder mehrerer virtuell festgelegter Elastikwellenerzeugungsquellen darstellt, und
   der Referenzverteilungsgenerator (425) die eine oder mehrere Referenzverteilungen erzeugt, indem er als Voraussetzung für die Durchführung der Simulation eine Eingabe von Informationen bezüglich einer Erzeugungsquelle einer oder mehrerer elastischer Wellen und von Informationen bezüglich der Installationspositionen von mindestens drei Sensoren entgegennimmt und die Simulation durchführt, indem er eine auf einer Zufallszahl basierende Fluktuation in Zeitrichtung zu einer theoretischen Zeit jeder empfangenen elastischen Welle hinzufügt, die von der Erzeugungsquelle jeden Sensor erreicht, oder Rauschen hinzufügt, das eine Amplitude für eine theoretische Amplitude verringert, die von der Erzeugungsquelle jeder elastischen Welle jeden Sensor erreicht, wobei die auf einer Zufallszahl basierende Fluktuation in Zeitrichtung ein Rauschterm ist, der durch Multiplikation einer Zeitfensterbreite, die einen Maximalwert der Zwischenverzögerung bestimmt, mit einer Zufallszahl erhalten wird, die einen zufälligen Zahlenwert annimmt.

3. Strukturevaluierungssystem (100, 100a) gemäß Anspruch 2, wobei die auf der Zufallszahl basierende Fluktuation in Zeitrichtung eine zufällige Fluktuation in Zeitrichtung ist, die innerhalb eines vorgegebenen Zeitbereichs gleichmäßig verteilt ist, und
   der Referenzverteilungsgenerator (425) die eine oder mehrere Referenzverteilungen erzeugt, indem er eine auf der Zufallszahl basierende Fluktuation in der Zeitrichtung hinzufügt, die für jeden der vorgegebenen Zeitbereiche unterschiedlich ist.

4. Strukturevaluierungssystem (100, 100a) gemäß einem der Ansprüche 1 bis 3,
   wobei der Korrektor (427) die eine oder mehrere Referenzverteilungen mit der Elastikwellenquellendichteverteilung für jede Region einer vorgegebenen Größe an derselben Position vergleicht und eine Korrektur so durchführt, dass, je höher die Dichte der Region in der einen oder den mehreren Referenzverteilungen ist, desto geringer die Dichte der Region in der Elastikwellenquellendichteverteilung ist, und eine Korrektur so durchführt, dass, je geringer die Dichte der Region in der einen oder den mehreren Referenzverteilungen ist, desto höher die Dichte der Region in der Elastikwellenquellendichteverteilung ist.

5. Strukturevaluierungssystem (100) gemäß Anspruch 4, wobei die eine oder mehreren Referenzverteilungen eine Vielzahl von unter unterschiedlichen Bedingungen erzeugten Referenzverteilungen sind, und

   das Strukturevaluierungssystem (100) ferner einen Verteilungsselektor (426) umfasst, der konfiguriert ist, aus der Vielzahl von Referenzverteilungen mindestens eine Referenzverteilung auszuwählen, deren Wert den Merkmalswerten bezüglich der Ortungsgenauigkeit der Dichteverteilung der elastischen Wellenquelle am nächsten kommt, und
   der Korrektor (427) die Elastikwellenquellendichteverteilung unter Verwendung der mindestens einen, vom Verteilungsselektor (426) ausgewählten Referenzverteilung korrigiert.

6. Strukturevaluierungssystem (100) gemäß Anspruch 5, wobei die Merkmalswerte bezüglich der Ortungsgenauigkeit entweder ein Durchschnittswert eines Unsicherheitsindexes eines Positionsortungsergebnisses innerhalb einer vorbestimmten Region der Elastikwellenquellendichteverteilung, ein Medianwert des Unsicherheitsindexes des Positionsortungsergebnisses oder eine Ortungsrate innerhalb einer vorbestimmten Region der Elastikwellenquellendichteverteilung sind,

   wobei der Unsicherheitsindex eines Positionsbestimmungsergebnisses ein Index ist, der die Genauigkeit der Positionsbestimmung angibt, und
   wobei die Ortungsrate das Verhältnis der Anzahl der Positionsortungen zu einer Elastikwellenerzeugungsquelle repräsentiert.

7. Strukturevaluierungssystem (100) gemäß Anspruch 5, wobei der Verteilungsselektor (426) eine Vielzahl von Unterteilungsregionen erzeugt, indem er die Elastikwellenquellendichteverteilung in eine Vielzahl von Regionen unterteilt, und für jede Unterteilungsregion eine andere Referenzverteilung auswählt, deren Wert den Merkmalswerten bezüglich der Ortungsgenauigkeit der jeweiligen Unterteilungsregion am nächsten kommt.

8. Strukturevaluierungssystem (100a) gemäß Anspruch 4, wobei die eine oder mehreren Referenzverteilungen eine Vielzahl von unter unterschiedlichen Bedingungen erzeugten Referenzverteilungen sind, und

   das Strukturevaluierungssystem (100a) ferner einen Verteilungswähler (426a) umfasst, der konfiguriert ist, aus der Vielzahl von Referenzverteilungen mindestens eine Referenzverteilung auszuwählen, die beim Template-Matching den höchsten Ähnlichkeitsgrad zur Dichteverteilung der elastischen Wellenquelle aufweist, und
   der Korrektor (427) die Elastikwellenquellendichteverteilung unter Verwendung mindestens einer mit dem Verteilungsselektor (426a) ausgewählten Referenzverteilung korrigiert.

9. Strukturevaluierungssystem (100a) gemäß Anspruch 8, wobei der Verteilungswähler (426a) einen Ähnlichkeitsgrad zwischen der Vielzahl von Referenzverteilungen und der Dichteverteilung der elastischen Wellenquelle berechnet, indem er einen Template-Abgleich zwischen der Vielzahl von Referenzverteilungen und der Elastikwellenquellendichteverteilung durchführt, und aus der Vielzahl von Referenzverteilungen eine Referenzverteilung mit dem höchsten Ähnlichkeitsgrad auswählt.

10. Strukturevaluierungssystem (100a) gemäß Anspruch 8, wobei der Verteilungswähler (426a) eine Vielzahl von Unterteilungsregionen erzeugt, indem er die Elastikwellenquellendichteverteilung in eine Vielzahl von Regionen unterteilt, und für jede Unterteilungsregion eine andere Referenzverteilung auswählt, die beim Musterabgleich mit der jeweiligen erzeugten Unterteilungsregion den höchsten Ähnlichkeitsgrad aufweist.

11. Verfahren zur Strukturevaluierung, umfassend:

   Lokalisieren (S108) von Positionen einer oder mehrerer Erzeugungsquellen elastischer Wellen durch Berechnung einer Ankunftszeitdifferenz einer Vielzahl von elastischen Wellen, wenn diese von jedem der mehreren Sensoren erfasst werden, wobei die elastischen Wellen innerhalb einer Struktur erzeugt werden, unter Verwendung der Ankunftszeiten der Vielzahl von elastischen Wellen, wenn diese von jedem der mindestens drei Sensoren erfasst werden, sowie von Informationen bezüglich einer Installationsposition der mindestens drei Sensoren; und

Erzeugen (S109) einer Elastikwellenquellendichteverteilung, die eine Dichteverteilung der einen oder mehreren Elastikwellenerzeugungsquellen darstellt, auf Basis eines Positionsbestimmungsergebnisses der einen oder mehreren Elastikwellenerzeugungsquellen; **dadurch gekennzeichnet, dass**

Erzeugen einer oder mehrerer Referenzverteilungen auf Basis einer Simulation unter Einbeziehung einer Zufallszahl, wobei es sich bei der Simulation um eine Simulation handelt, die die Elastikwellenquellendichteverteilung, die eine Dichteverteilung der einen oder mehreren Elastikwellenerzeugungsquellen darstellt, als die eine oder mehreren Referenzverteilungen auf Basis virtuell festgelegter einer oder mehrerer Elastikwellenerzeugungsquellen erzeugt, und

Korrigieren der Elastikwellenquellendichteverteilung auf Basis der einen oder mehreren Referenzverteilungen, Evaluieren (S113) einer Region, in der die Dichte in der korrigierten Elastikwellenquellendichteverteilung unter einem Schwellenwert liegt, als beschädigte Region.

## Revendications

1. Système d'évaluation de structure (100, 100a), comprenant :

   au moins trois capteurs (20-1 à 20-n) configurés pour détecter des ondes élastiques générées à l'intérieur d'une structure ;

   un localisateur de position (423) configuré pour localiser des positions d'une ou plusieurs sources de génération d'onde élastique en calculant une différence de temps d'arrivée des ondes élastiques lorsque détectées par chacun des au moins trois capteurs (20-1 à 20-n), à l'aide d'un temps d'arrivée de la pluralité d'ondes élastiques lorsque détectées par chacun des au moins trois capteurs et d'informations concernant une position d'installation des au moins trois capteurs (20-1 à 20-n) ; et

   un générateur de distribution (424) configuré pour générer une distribution de densité de source d'onde élastique représentant une distribution de densité de la ou des sources de génération d'onde élastique sur la base d'un résultat de localisation de la ou des sources de génération d'onde élastique obtenu par le localisateur de position ; **caractérisé en ce que**

   un générateur de distribution de référence (425) configuré pour générer une ou plusieurs distributions de référence sur la base d'une simulation incluant un nombre aléatoire, la simulation étant une simulation qui génère la distribution de densité de source d'onde élastique représentant une distribution de densité de la ou des sources de génération d'onde élastique en tant que la ou les distributions de référence sur la base d'une ou de plusieurs sources de génération d'onde élastique définies virtuellement,

   correcteur (427) configuré pour corriger la distribution de densité de source d'onde élastique sur la base de la ou des distributions de référence, et

   un évaluateur (428) configuré pour évaluer comme région endommagée une région dans laquelle une densité dans la distribution de densité de source d'onde élastique corrigée par le correcteur (427) est inférieure à un seuil.

2. Système d'évaluation de structure (100, 100a) selon la revendication 1,

   dans lequel la simulation est une simulation qui génère une distribution de densité de source d'onde élastique représentant une distribution de densité de la ou des sources de génération d'onde élastique en tant que la ou les distributions de référence sur la base d'une ou plusieurs sources de génération d'onde élastique définies virtuellement, et

   le générateur de distribution de référence (425) génère la ou les distributions de référence en recevant, en tant que condition pour effectuer la simulation, une entrée d'informations concernant une source de génération d'une ou plusieurs ondes élastiques et d'informations concernant des positions d'installation d'au moins trois capteurs, et en effectuant la simulation en ajoutant une fluctuation dans un sens temporel basée sur un nombre aléatoire à un temps théorique de chaque onde élastique reçue atteignant chaque capteur depuis la source de génération, ou en ajoutant un bruit qui réduit une amplitude d'une amplitude théorique atteignant chaque capteur depuis la source de génération de chaque onde élastique,

   la fluctuation dans un sens temporel basée sur un nombre aléatoire étant un terme de bruit obtenu en multipliant une largeur d'une fenêtre temporelle - qui détermine une valeur maximale de l'inter-délai par un nombre aléatoire prenant une valeur numérique aléatoire.

3. Système d'évaluation de structure (100, 100a) selon la revendication 2, dans lequel la fluctuation dans le sens temporel basée sur le nombre aléatoire est une fluctuation aléatoire dans le sens temporel qui est uniformément répartie dans une plage de temps prédéterminée, et

le générateur de distribution de référence (425) génère la ou les distributions de référence en ajoutant une fluctuation dans le sens temporel basée sur le nombre aléatoire qui diffère pour chacune des plages de temps prédéterminées.

4. Système d'évaluation de structure (100, 100a) selon l'une quelconque des revendications 1 à 3, dans lequel le correcteur (427) compare la ou les distributions de référence à la distribution de densité de source d'onde élastique pour chaque région d'une taille prédéterminée à une même position, et effectue une correction de telle sorte que plus la densité de la région est élevée dans la ou les distributions de référence, plus la densité de la région dans la distribution de densité de source d'onde élastique soit faible ; et effectue une correction de telle sorte que plus la densité de la région dans la ou les distributions de référence est faible, plus la densité de la région dans la distribution de densité de source d'onde élastique soit élevée.

5. Système d'évaluation de structure (100) selon la revendication 4, dans lequel la ou les distributions de référence constituent une pluralité de distributions de référence générées dans des conditions différentes, et

le système d'évaluation de structure (100) comprend en outre un sélecteur de distribution (426) configuré pour sélectionner, parmi la pluralité de distributions de référence, au moins une distribution de référence ayant une valeur la plus proche des valeurs de caractéristique concernant une précision de localisation de la distribution de densité de source d'onde élastique, et
le correcteur (427) corrige la distribution de densité de source d'onde élastique à l'aide de la au moins une distribution de référence sélectionnée par le sélecteur de distribution (426).

6. Système d'évaluation de structure (100) selon la revendication 5, dans lequel les valeurs de caractéristique concernant la précision de localisation sont une quelconque parmi une valeur moyenne d'un indice d'incertitude d'un résultat de localisation de position au sein d'une région prédéterminée de la distribution de densité de source d'onde élastique, une valeur médiane de l'indice d'incertitude du résultat de localisation de position, et un taux de localisation au sein d'une région prédéterminée de la distribution de densité de source d'onde élastique

dans lequel l'indice d'incertitude d'un résultat de localisation de position est un indice qui indique une précision de la localisation de position, et
dans lequel le taux de localisation représente un rapport entre un nombre de localisations de position et de source de génération d'onde élastique.

7. Système d'évaluation de structure (100) selon la revendication 5, dans lequel le sélecteur de distribution (426) génère une pluralité de régions de division en divisant la distribution de densité de source d'onde élastique en une pluralité de régions et sélectionne, pour chaque région de division, une distribution de référence différente ayant une valeur la plus proche de valeurs de caractéristique concernant une précision de localisation de chaque région de division.

8. Système d'évaluation de structure (100a) selon la revendication 4, dans lequel la ou les distributions de référence sont une pluralité de distributions de référence générées dans des conditions différentes, et

le système d'évaluation de structure (100a) comprend en outre un sélecteur de distribution (426a) configuré pour sélectionner, parmi la pluralité de distributions de référence, au moins une distribution de référence ayant un plus haut degré de similitude lors de comparaison de modèle avec la distribution de densité de source d'onde élastique, et
le correcteur (427) corrige la distribution de densité de source d'onde élastique à l'aide d'au moins une distribution de référence sélectionnée à l'aide du sélecteur de distribution (426a).

9. Système d'évaluation de structure (100a) selon la revendication 8, dans lequel le sélecteur de distribution (426a) calcule un degré de similitude entre la pluralité de distributions de référence et la distribution de densité de source d'onde élastique en effectuant une comparaison de modèle entre la pluralité de distributions de référence et la distribution de densité de source d'onde élastique, et sélectionne une distribution de référence ayant un degré de similitude le plus élevé parmi la pluralité de distributions de référence.

10. Système d'évaluation de structure (100a) selon la revendication 8, dans lequel le sélecteur de distribution (426a) génère une pluralité de régions de division en divisant la distribution de densité de source d'onde élastique en une pluralité de régions et sélectionne, pour chaque région de division, une distribution de référence différente ayant un plus haut degré de similitude lors de comparaison de modèle avec chaque région de division générée.

**11.** Procédé d'évaluation de structure, comprenant :

la localisation (S108) de positions d'une ou plusieurs sources de génération d'onde élastique en calculant une différence de temps d'arrivée d'une pluralité d'ondes élastiques lorsque détectées par chacune de la pluralité des ondes élastiques détectées en utilisant au moins trois capteurs qui détectent des ondes élastiques générées à l'intérieur d'une structure en utilisant un temps d'arrivée de la pluralité d'ondes élastiques lorsque détectées par chacun des au moins trois capteurs et des informations concernant une position d'installation des au moins trois capteurs ; et

la génération (S109) d'une distribution de densité de source d'onde élastique représentant une distribution de densité de la ou des sources de génération d'ondes élastiques sur la base d'un résultat de localisation de la ou des sources de génération d'ondes élastiques ;

**caractérisé en ce que** le procédé comprend

la génération d'une ou plusieurs distributions de référence sur la base d'une simulation incluant un nombre aléatoire, la simulation étant une simulation qui génère la distribution de densité de source d'onde élastique représentant une distribution de densité de la ou des sources de génération d'onde élastique en tant que la ou les distributions de référence sur la base d'une ou plusieurs sources de génération d'onde élastique définies virtuellement, et

la correction de la distribution de densité de source d'onde élastique sur la base de la ou des distributions de référence,

l'évaluation (S113) comme région endommagée une région dans laquelle une densité dans la distribution de densité de source d'onde élastique corrigée est inférieure à un seuil.

EP 4 488 674 B1

FIG. 1

# FIG. 2

SIGNAL PROCESSOR — 30

CLOCK

301 WAVEFORM SHAPING FILTER → 302 GATE GENERATION CIRCUIT → 303 ARRIVAL TIME DETERMINER → 305 TRANSMISSION DATA GENERATOR → 307 OUTPUTTER

304 FEATURE VALUE EXTRACTOR

306 MEMORY

EP 4 488 674 B1

# FIG. 3

PAVER

FLOOR SLAB
UNIT

V

W

50

53

51

52

20

SR

20

# FIG. 4

```
        ( START )
            │
            ▼                          S11
┌──────────────────────────────┐
│ RECEIVE INPUT OF SPEED CONDITION │
└──────────────────────────────┘
            │
            ▼                          S12
┌──────────────────────────────┐
│ RECEIVE INPUT OF SENSOR CONDITION │
└──────────────────────────────┘
            │
            ▼                          S13
┌──────────────────────────────┐
│   RECEIVE INPUT OF ELASTIC    │
│    WAVE SOURCE CONDITION      │
└──────────────────────────────┘
            │
            ▼                          S14
┌──────────────────────────────┐
│      CALCULATE DISTANCE       │
└──────────────────────────────┘
            │
            ▼                          S15
┌──────────────────────────────┐
│     CALCULATE ARRIVAL TIME    │
└──────────────────────────────┘
            │
            ▼                          S16
┌──────────────────────────────┐
│      CALCULATE AMPLITUDE      │
└──────────────────────────────┘
            │
            ▼                          S17
┌──────────────────────────────┐
│  STORE ASSOCIATED INFORMATION │
│          AS HIT DATA          │
└──────────────────────────────┘
            │
            ▼                          S18
        ◇ IS NUMBER
   NO  OF ELASTIC WAVE SOURCES
        M OR MORE? ◇
            YES
```

```
            ▼                          S19
┌──────────────────────────────┐
│       PERFORM FILTERING       │
└──────────────────────────────┘
            │
            ▼                          S20
┌──────────────────────────────┐
│    END HIT DATA GENERATION    │
└──────────────────────────────┘
            │
            ▼                          S21
┌──────────────────────────────┐
│    PERFORM POSITION LOCATION  │
└──────────────────────────────┘
            │
            ▼                          S22
┌──────────────────────────────┐
│  OUTPUT REFERENCE DISTRIBUTION │
└──────────────────────────────┘
            │
            ▼
          ( END )
```

27

## FIG. 5A

## FIG. 5B

## FIG. 5C

## FIG. 5D

FIG. 5E

FIG. 5F

FIG. 6

FIG. 7A

FIG. 7B

FIG. 7C

# FIG. 8

SENSOR | SIGNAL PROCESSOR | STRUCTURE EVALUATION APPARATUS

DETECT ELASTIC WAVES —S101

DIGITAL SIGNAL

S102

DETERMINE ARRIVAL TIME —S103

EXTRACT FEATURE VALUE —S104

GENERATE TRANSMISSION DATA —S105

TRANSMISSION DATA

S106

RECORD TRANSMISSION DATA —S107

LOCATE POSITION OF ELASTIC WAVE SOURCES —S108

GENERATE ELASTIC WAVE SOURCE DENSITY DISTRIBUTION —S109

CALCULATE FEATURE VALUES CONCERNING LOCATION ACCURACY —S110

SELECT REFERENCE DISTRIBUTION —S111

CORRECT ELASTIC WAVE SOURCE DENSITY DISTRIBUTION —S112

PERFORM EVALUATION —S113

DISPLAY EVALUATION RESULT —S114

EP 4 488 674 B1

# FIG. 9

R1  R2

USING FOR
CORRECTION

ELASTIC WAVE SOURCE
DENSITY DISTRIBUTION

USING FOR
CORRECTION

R11  R12

REFERENCE DISTRIBUTION 1

R21  R22

REFERENCE DISTRIBUTION 2

FIG. 10

EP 4 488 674 B1

FIG. 11

SENSOR SIGNAL PROCESSOR STRUCTURE EVALUATION
APPARATUS

DETECT ELASTIC WAVES — S101

DIGITAL SIGNAL

S102

DETERMINE ARRIVAL TIME — S103

EXTRACT FEATURE VALUE — S104

GENERATE TRANSMISSION DATA — S105

TRANSMISSION DATA

S106

RECORD TRANSMISSION DATA — S107

LOCATE POSITION OF
ELASTIC WAVE SOURCES — S108

GENERATE ELASTIC WAVE
SOURCE DENSITY DISTRIBUTION — S109

SELECT REFERENCE DISTRIBUTION — S201

CORRECT ELASTIC WAVE
SOURCE DENSITY DISTRIBUTION — S202

PERFORM EVALUATION — S113

DISPLAY EVALUATION RESULT — S114

FIG. 12A

FIG. 12B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3761022 A1
- EP 4151995 A1

- US 2022187253 A1